# EUROPÄISCHE PATENTSCHRIFT

(11) **EP 3 849 765 B1**
(45) Veröffentlichungstag und Bekanntmachung des Hinweises auf die Patenterteilung: **06.09.2023**
(21) Anmeldenummer: 19736287.4
(22) Anmeldetag: 27.05.2019
(51) Int. Cl.: B28B 3/12, B28B 13/02, B29C 67/24, B30B 15/30, B28B 1/00

(54) **VERFAHREN UND VORRICHTUNG ZUR HERSTELLUNG VON KUNSTSTEINPLATTEN**
PROCESS AND DEVICE FOR PRODUCING SYNTHETIC FLAGSTONES
PROCÉDÉ ET DISPOSITIF DE FABRICATION DE PANNEAUX DE PIERRE ARTIFICIELLE

(30) Priorität: 28.05.2018 AT 504332018
(43) Veröffentlichungstag der Anmeldung: 21.07.2021
(73) Patentinhaber: EQTEC Engineered Quartz Technology GmbH, 2700 Wiener Neustadt (AT)
(72) Erfinder: HORVATH, Wolfgang Johann, 2700 Wiener Neustadt (AT)
(74) Vertreter: Burger, Hannes
(86) Internationale Anmeldenummer: PCT/AT2019/060176
(87) Internationale Veröffentlichungsnummer: WO 2019/227114

(56) Entgegenhaltungen:
- WO-A1-2013/071326
- CN-U- 202 753 274
- DE-A1-102015 000 262
- DE-C- 844 810

## Beschreibung

Die Erfindung betrifft ein Verfahren sowie eine Vorrichtung zur kontinuierlichen Herstellung von Kunststeinplatten.

Kunststeinplatten werden üblicherweise durch Verpressen und Aushärten eines Gemisches aus einem mineralischen Füllstoff, zum Beispiel Quarz-Granulat bzw. Quarzsand, und einem organischen bzw. polymeren Bindemittel, zum Beispiel chemisch polymerisierbares und ggf. vernetzbares Harz hergestellt. Aufgrund der Möglichkeit der Anpassung von Eigenschaften, zum Beispiel der Möglichkeit der Gestaltung des optischen Erscheinungsbildes erfreuen sich künstlich hergestellte Kunststeinplatten immer größerer Beliebtheit, und ersetzen solche Kunststeinplatten Platten aus Naturstein mittlerweile in vielen Bereichen, beispielsweise als Arbeitsplatten, Bodenbeläge, Wandverkleidungen, Fassadenbestandteile, etc..

Herkömmlich werden solche Kunststeinplatten durch Mischen der Ausgangsmaterialien, Einbringen der gemischten Materialien in Negativformen und anschließendem Verpressen unter Aushärtung des Bindemittels im Taktverfahren, also diskontinuierlich hergestellt. Grundsätzlich sind auch Verfahren und Anlagen zur kontinuierlichen Herstellung von Kunststeinplatten bekannt geworden. Bei diesen kontinuierlichen Verfahren werden zum Beispiel Doppelbandpressen zum kontinuierlichen Verpressen der Materialien vorgeschlagen. Nach dem Pressvorgang wird hierbei ein gepresster Kunststeinstrang mit bestimmter Breite und Dicke erhalten, welcher hinsichtlich einer gewünschten Längsausdehnung der Kunststeinplatten sodann zerteilt wird.

Aus der WO 2013/071326 A1 ist ein gattungsgemäßes Verfahren und eine Vorrichtung unter Verwendung einer Doppelbandpresse bekannt, bei welchem Verfahren mittels der Doppelbandpresse ein kontinuierlicher Kunststeinstrang hergestellt wird. Aus den Ausgangsmaterialien wird in diesem Fall vor dem Verpressen kontinuierlich mittels einer Beschickungsvorrichtung ein Granulat aus abgerundeten Partikeln mit einem Durchmesser zwischen 5 mm und 30 mm erzeugt. Die Beschickungsvorrichtung weist mindestens zwei drehbare Trommeln auf, welche Trommeln zur Herstellung zweier Granulate aus abgerundeten Partikeln mit je einer

Farbe vorgesehen sind. Die in der WO 2013/071326 A1 offenbarte Vorrichtung und das Verfahren eignen sich jedoch nicht zur industriellen Herstellung von Kunststeinplatten in hohen Stückzahlen. Zum Beispiel kann es bei vorbekannten Verfahren aufgrund von Abweichungen in den Eigenschaften unterschiedlicher Ausgangsmaterialien und der Neigung des Pressmaterials zum Verklumpen zu Problemen während der Herstellung kommen, sodass Reproduzierbarkeit und Prozessstabilität unzureichend sind. Insbesondere sind die Mischvorgänge und Beschickungsvorgänge bei den vorbekannten Verfahren und Vorrichtungen insofern problematisch, da sie unmittelbar von dem folgenden, kontinuierlichen Pressvorgang, beispielsweise der Bandgeschwindigkeit abhängen.

In DE 10 2015 000262 A1 ist ein Verfahren sowie eine Anlage zur Herstellung eines thermoplastischen Granulats offenbart. Zur Bildung des thermoplastischen Granulats werden mehrere Ausgangsstoffe, etwa Kunststoffpulver, Füllstoffe, Additive aus Vorratsbehältnissen in zumindest einen zweistufigen Heiz-Kühlmischer überführt, gemischt und anschließend auf ein Band einer Doppelbandpresse aufgebracht. Es folgt eine thermische und mechanische Behandlung in der Doppelbandpresse und anschließend eine Zerkleinerung zu einem Kunststoffgranulat. Gemäß einer Ausbildung der Anlage der DE 10 2015 000262 A1 können auch zwei Mischvorrichtungen vorgesehen sein, aus welchen gemischte Ausgangsstoffe aufeinander oder nebeneinander auf das Band der Doppelbandpresse aufgebracht werden können. Der mindestens eine, zweistufige Heiz-Kühlmischer kann zum diskontinuierlichen oder kontinuierlichen Mischen ausgebildet sein.

Aufgabe der vorliegenden Erfindung war es, die Nachteile des Standes der Technik zu überwinden und eine Vorrichtung und ein Verfahren zur Verfügung zu stellen, mittels derer eine kontinuierliche Herstellung von Kunststeinplatten in hohen Stückzahlen und mit hoher Reproduzierbarkeit und Prozessstabilität ermöglicht ist.

Diese Aufgabe wird durch ein Verfahren und eine Vorrichtung gemäß den Ansprüchen gelöst.

Das Verfahren zur kontinuierlichen Herstellung von Kunststeinplatten, umfasst die Schritte
- Bereitstellen von Ausgangsmaterialien umfassend zumindest einen mineralischen Füllstoff und zumindest ein organisches Bindemittel,
- Mischen der Ausgangsmaterialien,
- Aufbringen der gemischten Ausgangsmaterialien auf ein kontinuierlich bewegtes Unterband einer Doppelbandpresse oder ein dem Unterband vorgelagertes, kontinuierlich bewegtes Transportmittel,
- kontinuierliches Verpressen der gemischten Ausgangsmaterialien zur einem verpressten Materialstrang,
- Härten des organischen Bindemittels,
- und Vereinzeln des Materialstranges Kunststeinplatten.

Das Mischen der Ausgangsmaterialien wird mittels mindestens zwei separaten Mischvorrichtungen zeitlich versetzt und koordiniert gemäß einer ersten vorgebbaren bzw. vorgegebenen Taktung im Batch-Mischbetrieb durchgeführt, wobei den mindestens zwei Mischvorrichtungen vor Beginn eines jeweiligen Batch-Mischvorgangs jeweils eine definierte Menge der Ausgangsmaterialien zugeführt wird.

Außerdem werden die gemischten Ausgangsmaterialien aus den mindestens zwei Mischvorrichtungen zeitlich versetzt und koordiniert gemäß einer zweiten vorgebbaren bzw. vorgegebenen Taktung in eine oder mehrere Streuvorrichtung(en) überführt, und werden die gemischten Ausgangsmaterialien mittels der oder den Streuvorrichtung(en) kontinuierlich und ununterbrochen auf das Unterband oder das dem Unterband vorgelagerte Transportmittel aufgebracht.

Im Speziellen kann das Mischen der Ausgangsmaterialien in den mindestens zwei Mischvorrichtungen gemäß der ersten Taktung abwechselnd erfolgen. Ebenso kann das Überführen der gemischten Ausgangsmaterialien aus den mindestens zwei Mischvorrichtungen in die Streuvorrichtung(en) gemäß der zweiten Taktung abwechselnd erfolgen. Auf diese Weise kann eine kontinuierliche und ununterbrochene Beschickung des kontinuierlich bewegten Unterbandes oder des dem Unterband vorgelagerten, kontinuierlich bewegten Transportmittel sichergestellt werden.

Generell gilt, dass wenn hier und im Folgenden von zeitlich versetzt bzw. zeitlichem Versatz die Rede ist, so ist hierunter zu verstehen, dass die jeweils beschriebenen Vorgänge zum Beispiel abwechselnd erfolgen können, dass es aber auch möglich ist, dass die betreffenden Vorgänge sich zeitlich zumindest teilweise bzw. zeitweise überlappen können.

Das dem Unterband vorgelagerte Transportmittel kann zum Beispiel durch ein Förderband gebildet sein. Jeder Streuvorrichtung kann zumindest eine Mischvorrichtung funktionstechnisch zugeordnet sein, wobei die mindestens zwei Mischvorrichtungen zum Beispiel einer einzelnen Streuvorrichtung funktionstechnisch zugeordnet sein können, sodass die gemischten Ausgangsmaterialien aus den mindestens zwei Mischvorrichtungen getaktet gemäß der zweiten Taktung in eine einzelne Streuvorrichtung überführt werden. Die Mischvorrichtungen können beispielweise als sogenannte Gleichlaufmischer ausgebildet sein.

Als Ausgangsmaterial mineralischer Füllstoff können zum Beispiel Quarz-Granulat bzw. Quarzsand, Quarzit, Steinmaterial, Marmormehl, etc. oder aus Mischungen von mineralischen Füllstoffen. Der oder die mineralische(n) Füllstoff(e) können zum Beispiel in granulärer oder pulverförmiger Form eingesetzt werden, und sind insbesondere rieselfähig. Als Ausgangsmaterial organisches Bindemittel können zum Beispiel polymerisierbare bzw. chemisch härtbare Harze, wie etwa Polyester-, Polyurethan-, Epoxid-, oder Phenolharze bereitgestellt werden, wobei auch Mehrkomponentensysteme, welche zum Beispiel Vernetzungsmittel bzw. Härter oder Beschleuniger enthalten können, zum Einsatz kommen können. Das organische Bindemittel bzw. dessen Komponenten können grundsätzlich sowohl in flüssiger als auch in fester, beispielsweise granulärer oder pulverförmiger Form bereitgestellt werden. Des Weiteren können zusätzliche Stoffe als Ausgangsmaterialien beigemengt werden, beispielsweise Pigmente, Farbstoffe, Biozide oder weitere Füllmaterialien, wie etwa Glasbruchstücke.

Durch die angegebenen Maßnahmen kann ein Verfahren bereitgestellt werden, welches sich im Besonderen zur kontinuierlichen Massenproduktion von Kunststeinplatten eignet. Im Speziellen können die Mischvorgänge zur Herstellung von gemischten Ausgangsmaterialien bzw. Pressmaterial getaktet bzw. im Takt durchgeführt werden. Hierdurch können die Mischparameter wie etwa die Mischdauer unabhängig von der kontinuierlichen Verteilung des Pressmaterials auf dem Unterband oder dem vorgelagerten Transportmittel festgelegt werden. Auf diese Weise kann zum Beispiel eine ausreichende Homogenisierung der Ausgangsmaterialien vor dem Aufbringen auf das Band oder Transportmittel unabhängig von dem kontinuierlichen Verpressen zu einem Kunststeinstrang erfolgen. Außerdem kann je nach Anforderungen an die Verfahrensführung bzw. das Produkt, zum Beispiel die geforderte Menge an Kunststeinplatten pro Zeiteinheit bzw. den Typ der zu produzierenden Kunststeinplatte, jeweils eine ausreichende Mischkapazität bereitgestellt werden.

Die Beschickung bzw. Bestreuung des Bandes oder Transportmittels mit gemischten Ausgangsmaterialien erfolgt entkoppelt von den getaktet im Batch-Betrieb durchgeführten Mischvorgängen kontinuierlich, sodass eine fortwährende, kontinuierliche Produktion von Kunststeinplatten ohne Unterbrechung ermöglicht ist. Durch die angegebenen Maßnahmen können außerdem während des Mischens auftretende Probleme, etwa eine Bildung von Verklumpungen der gemischten Ausgangsmaterialien, schlechte Durchmischung oder fehlerhafter Materialzuführung, Bildung von Ablagerungen oder gar Verstopfungen, rechtzeitig erkannt werden.

In weiterer Folge kann somit einer Produktion von fehlerhaften Kunststeinplatten vorgebeugt bzw. eine ungewollte Herstellung von Ausschussware hintangehalten werden. Des Weiteren kann eine Herstellung von Kunststeinplatten mit wählbarer Dichte und Plattendicke in einfacher Art und Weise, aber dennoch effizient und reproduzierbar erfolgen. Insgesamt kann durch die angeführten Maßnahmen vorteilhafterweise ein sehr prozessstabiles Verfahren mit guter Reproduzierbarkeit hinsichtlich der Produkte bereitgestellt werden.

Vorzugsweise kann bei dem Verfahren vorgesehen sein, dass die gemischten Ausgangsmaterialien mittels einer oder mehrerer hierzu ausgebildeten und dimensionierten Streuvorrichtung(en) über eine gesamte Bandbreite des Unterbands oder des dem Unterband vorgelagerten Transportmittels aufgebracht werden. Außerdem können die Ausgangsmaterialien den mindestens zwei Mischvorrichtungen vor Beginn eines jeweiligen Batch-Mischvorgangs gemäß einer dritten vorgegebenen bzw. vorgebbaren Taktung zugeführt werden. Zur Zuführung der jeweiligen definierten Mengen an Ausgangsmaterialien in die Mischvorrichtungen können an sich bekannte Mittel bzw. Methoden eingesetzt werden, beispielsweise können Dosierventile, -klappen oder -schnecken verwendet werden. Die Ausgangsmaterialien können den Mischvorrichtungen zum Beispiel aus Vorratsbehältnissen zudosiert werden.

Bei einer Weiterbildung des Verfahrens kann vorgesehen sein, dass die Mischvorrichtungen über eine Einlassöffnung mit den Ausgangsmaterialien beschickt werden, und die gemischten Ausgangsmaterialien aus den Mischvorrichtungen über eine Auslassöffnung geleert werden, wobei für das jeweilige Mischen die Einlassöffnung und die Auslassöffnung geschlossen werden, sodass das Mischen jeweils in einem geschlossenen Gehäuse der Mischvorrichtungen durchgeführt wird.

Auf diese Weise kann das jeweilige Mischen der Ausgangsmaterialien besonders prozesssicher bzw. prozessstabil durchgeführt werden.

Gemäß einer bevorzugten Weiterbildung des Verfahrens können die gemischten Ausgangsmaterialien aus mindestens zwei ortsfest angeordneten Mischvorrichtungen wenigstens einer ortsfest oberhalb des Unterbands oder ortsfest oberhalb des dem Unterband vorgelagerten Transportmittels angeordneten Streuvorrichtung über zumindest ein physisches Mittel zum Transfer von gemischten Ausgangsmaterialien zugeführt werden. Das Mittel zum Transfer kann zum Beispiel durch ein Förderband oder mehrere Förderbänder, eine Materialrutsche oder -schlauch gebildet sein.

Durch diese Maßnahmen ist eine besonders einfach auszuführende und kostengünstige, aber dennoch prozessstabile Verfahrensführung ermöglicht. Im Speziellen kann die Anzahl an erforderlichen Streuvorrichtungen minimiert werden. Außerdem kann auch mit einer verhältnismäßig geringen Anzahl an angetriebenen Maschinenkomponenten ausgekommen werden, was einerseits günstig hinsichtlich der Betriebskosten ist, und auch die Anzahl potentieller Fehlerquellen senkt.

Bei einer Verfahrensvariante kann aber auch vorgesehen sein, dass die Ausgangsmaterialien mittels mindestens zwei verstellbaren Mischvorrichtungen gemischt werden, wobei eine jeweilige verstellbare Mischvorrichtung zum Überführen der gemischten Ausgangsmaterialien in wenigstens eine ortsfest oberhalb des Unterbandes oder oberhalb des dem Unterband vorgelagerten Transportmittels angeordnete Streuvorrichtung, jeweils in eine Auslassposition oberhalb der wenigstens einen Streuvorrichtung verstellt wird. Des Weiteren kann bei dieser Verfahrensführung vorgesehen sein, dass die mindestens zwei Mischvorrichtungen zum Befüllen mit Ausgangsmaterialien in eine Befüllposition, oder nacheinander in mehrere Befüllpositionen verstellt werden. Eine Befüllposition kann zum Beispiel eine Position an einer Materialausgabe für die Ausgangsmaterialien sein, oder zum Beispiel eine Position unterhalb einer Auslassöffnung eines Vorratsbehältnisses für die Ausgangsmaterialien.

Von Vorteil ist hierbei, dass etwaige Probleme, welche sich aufgrund von installierten Transportstrecken zwischen den Mischvorrichtungen und der oder den Streuvorrichtung(en) ergeben können, vermieden werden. So kann zum Beispiel ein allfälliges Problem während der Produktion aufgrund einer Bildung von Ablagerungen oder Verstopfungen an bzw. von solchen Transportstrecken vermieden werden. Außerdem kann auch bei dieser Verfahrensführung die Anzahl an erforderlichen Streuvorrichtungen minimiert werden. Dies, da trotz der Unmöglichkeit, dass zwei verschiedene Mischvorrichtungen nicht gleichzeitig oberhalb einer Streuvorrichtung positioniert werden können, dennoch eine jeweilige Streuvorrichtung als Materialpuffer für jene Zeitspanne, in welcher keine Materialzuführung stattfindet, fungieren kann. Die Mischvorrichtungen können bei dieser Ausführungsvariante des Verfahrens beispielsweise karussell-artig angeordnet sein, sodass jede Mischvorrichtung jeweils zwischen einer Ausgabeposition oberhalb einer Streuvorrichtung und einer oder mehrerer Befüllposition(en) wechseln kann.

Von Vorteil kann aber auch eine Verfahrensführung sein, bei welcher die gemischten Ausgangsmaterialien mittels wenigstens zwei verfahrbaren Streuvorrichtungen auf das Unterband oder das dem Unterband vorgelagerte Transportmittel aufgebracht werden. Hierbei können gemäß einer vierten Taktung die Streuvorrichtungen zum Überführen der gemischten Ausgangsmaterialien aus einer Mischvorrichtung in eine Streuvorrichtung zeitlich versetzt und koordiniert jeweils in eine jeweilige Beladungsposition verfahren werden, und gemäß der vierten Taktung die Streuvorrichtungen zum Aufbringen der gemischten Ausgangsmaterialien zeitlich versetzt und koordiniert in eine jeweilige Streuposition oberhalb des Unterbandes oder des dem Unterband vorgelagerten Transportmittels verfahren werden.

Vorteilhaft bei dieser Verfahrensvariante ist unter anderem, dass wiederum Transportstrecken zwischen den Mischvorrichtungen und der oder den Streuvorrichtung(en) vermieden werden können. Die Streuvorrichtung(en) können beispielsweise motorisch, pneumatisch oder hydraulisch angetrieben an entsprechenden Führungselementen, wie etwa Schienenführungen, angeordnet sein. Um etwaige Materiallücken auf dem Unterband oder dem vorgelagerten Transportmittel zu vermeiden, kann gemäß der vierten Taktung vorgesehen sein, dass zu jedem Zeitpunkt mittels einer Streuvorrichtung gemischte Ausgangsmaterialien auf das Unterband bzw. das vorgelagerte Transportmittel aufgebracht werden. Hierbei kann insbesondere vorgesehen sein, dass zumindest zeitweise zumindest zwei Streuvorrichtungen gleichzeitig an unterschiedlichen Stellen bzw. Streupositionen die gemischten Ausgangsmaterialien auf das Unterband oder das vorgelagerte Transportmittel aufbringen.

In weiterer Folge kann auch vorgesehen sein, dass die wenigstens zwei verfahrbaren Streuvorrichtungen zum Überführen der gemischten Ausgangsmaterialien aus einer Mischvorrichtung in die Streuvorrichtungen in eine jeweilige Beladungsposition unterhalb einer Mischvorrichtung verfahren werden, und anschließend eine Auslassöffnung der jeweiligen Mischvorrichtung geöffnet wird.

Dies ermöglicht eine besonders einfache und gleichzeitig möglichst fehlerfreie und prozessstabile Überführung der gemischten Ausgangsmaterialien in eine jeweilige Streuvorrichtung.

Ganz grundsätzlich ist auch eine Verfahrensführung möglich, bei welcher die gemischten Ausgangsmaterialien mittels wenigstens zwei Streuvorrichtungen in wenigstens zwei übereinander angeordneten Ausgangsmaterialschichten auf das Unterband oder auf das dem Unterband vorgelagerte Transportmittel aufgebracht werden.

Eine derartige Verfahrensführung ermöglicht eine Steigerung des Masseflusses an auf das Unterband oder das vorgelagerte Transportmittel aufgebrachten Ausgangsmaterialien, es kann also insgesamt pro Zeiteinheit mehr Material auf das Unterband oder das vorgelagerte Transportmittel aufgebracht werden. Dadurch können insgesamt Kunststeinplatten mit großer Plattendicke hergestellt werden. Natürlich muss bei einer solchen Verfahrensführung ausreichend Mischkapazität bereitgestellt werden. Bei einer Verfahrensführung mit stationär bzw. ortsfest über dem Unterband oder dem vorgelagerten Transportmittel angeordneten Streuvorrichtungen sind hierzu zwei Streuvorrichtungen grundsätzlich ausreichend. Bei einem Einsatz von verfahrbaren Streuvorrichtungen müssen für eine solche Verfahrensführung zumindest drei Streuvorrichtungen eingesetzt werden.

Bei einer Weiterbildung des Verfahrens kann auch vorgesehen sein, dass die gemischten Ausgangsmaterialien mittels einer in der oder den Streuvorrichtung(en) angeordneten Vergleichmäßigungs-Vorrichtung gleichmäßig und homogen verteilt werden, und auf das Unterband oder das dem Unterband vorgelagerte Transportmittel aufgebracht werden.

Als Vergleichmäßigungs-Vorrichtung kann hierbei zum Beispiel ein Walzenpaar bestehend aus gegenläufig rotierenden Walzen eingesetzt werden, welche insbesondere entlang einer im Wesentlichen horizontalen Rotationsachse gelagert sind. Die Walzen können zudem zum Beispiel Schneckenprofile aufweisen, sodass auch eine Förderung der gemischten Ausgangsmaterialien in der oder den Streuvorrichtung(en) zwecks gleichmäßiger Verteilung möglich ist. Dies ist insbesondere dann von Vorteil, wenn die gemischten Ausgangsmaterialien an einer eng begrenzten Beladungsstelle in die Streuvorrichtung(en) eingebracht werden. Zusätzlich können zum Beispiel etwaige Verklumpungen der Ausgangsmaterialien mittels einer derartigen Vergleichmäßigungs-Vorrichtung aufgebrochen werden, sodass die gemischten Ausgangsmaterialien in der oder den Streuvorrichtung(en) weiter homogenisiert, und in der Folge gleichmäßig verteilt auf das Unterband oder das vorgelagerte Transportmittel aufgebracht bzw. aufgestreut werden können. Alternativ oder zusätzlich können derartige Vergleichmäßigungs- bzw. Brechervorrichtungen auch einer Streuvorrichtung vorgeschaltet sein.

Schließlich kann bei einer weiteren Ausführungsform des Verfahrens vorgesehen sein, dass die auf das Unterband aufgebrachten Ausgangsmaterialien vor dem Eintritt zwischen Oberband und Unterband der Doppelbandpresse mittels einer oder mehrerer Vorverdichtungswalze(n) oder Vorverdichtungswalzenpaar(e) verdichtet werden.

Hierbei ist insbesondere vorteilhaft, dass die Doppelbandpresse selbst vor allem im Materialeintrittsbereich vor allzu großer Abrasion geschützt werden, da ein bereits vorverdichtetes Material in die Doppelbandpresse eintritt. In weiterer Folge kann auf diese Weise die Lebensdauer der Doppelbandpresse verlängert werden, bzw. können kostspielige Instandsetzungen der Doppelbandpresse möglichst hinausgezögert werden. Die Vorverdichtungswalze(n) bzw. - walzenpaar(e) können bei zu hoher Abrasion hingegen ohne großen Aufwand und verhältnismäßig kostengünstig ersetzt werden. Das Ausmaß der Vorverdichtung mittels der oder den Vorverdichtungswalze(n) kann hierbei durchaus zum Beispiel 90 % oder mehr, bezogen auf die Endverdichtung nach dem Durchtritt durch die Doppelbandpresse, betragen.

Eine Verfahrungsführung kann schließlich derart erfolgen, dass zumindest eine Dosierung der Ausgangsmaterialien in die Mischvorrichtungen und eine Mischdauer in den Mischvorrichtungen, sowie eine Aufbringungsgeschwindigkeit der gemischten Ausgangsmaterialien auf das Unterband oder das dem Unterband vorgelagerte Transportmittel, eine Bandgeschwindigkeit des Unterbandes und Pressdruck auf die gemischten Ausgangsmaterialien hinsichtlich jeweils gewünschter Dichte und Dicke der Kunststeinplatten gesteuert wird.

Die Aufgabe der Erfindung wird auch durch Bereitstellung einer Anlage gelöst.

Die Anlage zur kontinuierlichen Herstellung von Kunststeinplatten umfasst
- ein oder mehrere Vorratsbehältnis(se) zur Beinhaltung von Ausgangsmaterialien,
- sowie eine Doppelbandpresse mit einem Unterband und einem Oberband, sowie zumindest einem Heizmittel zum Erhitzen von zwischen dem Unterband und dem Oberband geförderten Materialien.

Zum Mischen der Ausgangsmaterialien sind mindestens zwei separat angeordnete und für Batch-Mischbetrieb ausgestaltete Mischvorrichtungen angeordnet. Des Weiteren ist eine oder sind oder mehrere zur kontinuierlichen Beschickung des Unterbandes oder eines dem Unterband vorgelagerten Transportmittels mit gemischten Ausgangsmaterialien ausgebildete Streuvorrichtung(en) angeordnet. Außerdem ist wenigstens ein Mittel zum Transfer von gemischten Ausgangsmaterialien aus den mindestens zwei Mischvorrichtungen in die Streuvorrichtung(en) vorgesehen.

Das dem Unterband vorgelagerte Transportmittel kann zum Beispiel durch ein Förderband gebildet sein. Jeder Streuvorrichtung kann zumindest eine Mischvorrichtung funktionstechnisch zugeordnet sein, wobei die mindestens zwei Mischvorrichtungen zum Beispiel einer einzelnen Streuvorrichtung funktionstechnisch zugeordnet sein können, sodass im Betrieb der Anlage die gemischten Ausgangsmaterialien aus den mindestens zwei Mischvorrichtungen getaktet bzw. zeitversetzt in eine einzelne Streuvorrichtung überführt werden können. Das wenigstens eine Mittel zum Transfer von gemischten Ausgangsmaterialien aus den mindestens zwei Mischvorrichtungen in die Streuvorrichtung(en) kann beispielsweise ein physisches Fördermittel wie etwa ein Materialförderband sein. Das Mittel zum Transfer kann aber auch die Schwerkraft sein, indem im Betrieb der Anlage die gemischten Ausgangsmaterialien aus den mindestens zwei Mischvorrichtungen in die Streuvorrichtung(en) geleert wird.

Durch die angegebenen Merkmale kann eine Anlage bereitgestellt werden, welche sich besonders gut zur kontinuierlichen Massenproduktion von Kunststeinplatten eignet. Im Speziellen können im Betrieb der Anlage die Mischvorgänge zur Herstellung von gemischten Ausgangsmaterialien bzw. Pressmaterial getaktet bzw. im Takt durchgeführt werden. Hierdurch können Mischparameter wie etwa die Mischdauer unabhängig von der kontinuierlichen Verteilung des Pressmaterials auf dem Unterband oder dem vorgelagerten Transportmittel festgelegt werden. Die Mischvorrichtungen können beispielsweise durch sogenannte Gleichlaufmischer gebildet sein.

Durch die Möglichkeit des Verbindens von Batch-Mischvorgängen und kontinuierlicher Bandbeschickung im Betrieb der Anlage, können außerdem während des Mischens auftretende Probleme, etwa eine Bildung von Verklumpungen der gemischten Ausgangsmaterialien, schlechte Durchmischung oder fehlerhafter Materialzuführung, Bildung von Ablagerungen oder gar Verstopfungen, rechtzeitig erkannt werden. In weiterer Folge kann somit einer Produktion von fehlerhaften Kunststeinplatten vorgebeugt bzw. eine ungewollte Herstellung von Ausschussware hintangehalten werden. Insgesamt kann durch die angegebenen Merkmale vorteilhafterweise ein sehr prozessstabiler Betrieb der Anlage mit guter Reproduzierbarkeit hinsichtlich der Produkte erfolgen.

Vorzugsweise kann vorgesehen sein, dass die Streuvorrichtung(en), insbesondere eine untere Ausgabeöffnung der Streuvorrichtung(en) derart ausgestaltet und dimensioniert ist oder sind, dass die gemischten Ausgangsmaterialien über eine gesamte Bandbreite des Unterbands oder des dem Unterband vorgelagerten Transportmittels aufgebracht werden können. Hierzu kann eine Breitenerstreckung einer unteren Auslassöffnung der Streuvorrichtung(en) einer Bandbreite des Unterbandes zumindest weitestgehend entsprechen.

Zur Zuführung der jeweiligen definierten Mengen an Ausgangsmaterialien in die Mischvorrichtungen können an sich bekannte Mittel eingesetzt vorgesehen sein, beispielsweise können Dosierventile, -klappen oder -schnecken angeordnet sein. Zur Aufbewahrung bzw. Zwischenlagerung der Ausgangsmaterialien können zum Beispiel ein oder mehrere Vorratsbehältniss(e) angeordnet sein.

Bei der Ausgestaltung der Anlage ist eine Steuerungsvorrichtung vorgesehen, welche Steuerungsvorrichtung zur zeitlichen versetzten und koordinierten Durchführung von Mischvorgängen in den Mischvorrichtungen gemäß einer ersten Taktung, sowie zur zeitlichen versetzten und koordinierten Durchführung von Überführungsvorgängen der gemischten Ausgangsmaterialien von den Mischvorrichtungen in die Streuvorrichtung(en) gemäß einer zweiten Taktung ausgebildet ist.

Durch eine derart ausgebildete Steuerungsvorrichtung kann im Betrieb der Anlage zum Beispiel eine ausreichende Homogenisierung der Ausgangsmaterialien vor dem Aufbringen auf das Band oder Transportmittel unabhängig von dem kontinuierlichen Verpressen zu einem Kunststeinstrang erfolgen. Die Beschickung bzw. Bestreuung des Bandes oder Transportmittels mit gemischten Ausgangsmaterialien kann entkoppelt von den getaktet im Batch-Betrieb durchgeführten Mischvorgängen kontinuierlich erfolgen, sodass eine fortwährende, kontinuierliche Produktion von Kunststeinplatten ohne Unterbrechung ermöglicht ist.

Im Speziellen kann die Steuerungsvorrichtung zur Durchführung der Mischvorgänge in den mindestens zwei Mischvorrichtungen gemäß der ersten Taktung in abwechselnder Abfolge ausgebildet sein. Ebenso kann die Steuerungsvorrichtung zur Durchführung der Überführungsvorgänge der gemischten Ausgangsmaterialien aus den mindestens zwei Mischvorrichtungen in die Streuvorrichtung(en) gemäß der zweiten Taktung in abwechselnder Abfolge ausgebildet sein. Auf diese Weise kann im Betrieb der Anlage eine kontinuierliche und ununterbrochene Beschickung des kontinuierlich bewegten Unterbandes oder des dem Unterband vorgelagerten, kontinuierlich bewegten Transportmittel sichergestellt werden. Außerdem kann die Steuerungsvorrichtung zur Zuführung der Ausgangsmaterialien in die mindestens zwei Mischvorrichtungen vor Beginn eines jeweiligen Batch-Mischvorgangs gemäß einer dritten vorgegebenen bzw. vorgebbaren Taktung, insbesondere in abwechselnder Abfolge, ausgebildet sein.

Bei einer weiteren Ausgestaltungsform der Anlage kann vorgesehen sein, dass die Mischvorrichtungen jeweils ein Gehäuse mit einer verschließbaren Einlassöffnung und einer verschließbaren Auslassöffnung aufweisen.

Im Betrieb der Anlage können die Mischvorgänge hierdurch besonders prozesssicher bzw. prozessstabil durchgeführt werden.

Bei einer bevorzugten Ausgestaltungsvariante der Anlage können mindestens zwei ortsfest angeordnete Mischvorrichtungen sowie wenigstens eine ortsfest oberhalb des Unterbands oder ortsfest oberhalb des dem Unterband vorgelagerten Transportmittels angeordnete Streuvorrichtung vorgesehen sein, wobei zur Überführung von gemischten Ausgangsmaterialien von den Mischvorrichtungen in die wenigstens eine ortsfest angeordnete Streuvorrichtung zumindest ein physisches Mittel zum Transfer von gemischten Ausgangsmaterialien, insbesondere ein Förderband, eine Materialrutsche oder -schlauch angeordnet sein kann.

Hierdurch ist ein eine besonders einfach auszuführender und kostengünstiger, aber dennoch prozessstabiler Betrieb der Anlage ermöglicht. Im Speziellen kann die Anzahl an erforderlichen Streuvorrichtungen minimiert werden. Außerdem kann auch mit einer verhältnismäßig geringen Anzahl an angetriebenen Maschinenkomponenten ausgekommen werden, was einerseits günstig hinsichtlich der Betriebskosten ist, und auch die Anzahl potentieller Fehlerquellen senkt.

Es kann aber auch eine Ausgestaltung der Anlage vorgesehen sein, bei welcher mindestens zwei verstellbare Mischvorrichtungen und wenigstens eine ortsfest oberhalb des Unterbandes oder oberhalb des dem Unterband vorgelagerten Transportmittels angeordnete Streuvorrichtung vorgesehen sind, wobei eine jeweilige Mischvorrichtung in eine Auslassposition oberhalb der wenigstens einen Streuvorrichtung verstellbar angeordnet ist. Die mindestens zwei verstellbaren Mischvorrichtungen können hierbei zum Befüllen mit Ausgangsmaterialien in eine Befüllposition, oder nacheinander in mehrere Befüllpositionen verstellbar angeordnet sein. Eine Befüllposition kann zum Beispiel eine Position an einer Materialausgabe für die Ausgangsmaterialien sein, oder zum Beispiel eine Position unterhalb einer Auslassöffnung eines Vorratsbehältnisses für die Ausgangsmaterialien.

Im Betrieb der Anlage ergibt sich durch diese Merkmale der Vorteil, dass etwaige Probleme, welche sich aufgrund von installierten Transportstrecken zwischen den Mischvorrichtungen und der oder den Streuvorrichtung(en) ergeben können, vermieden werden können. Außerdem kann bei dieser Ausgestaltungsvariante der Anlage die Anzahl an erforderlichen Streuvorrichtungen minimiert werden. Dies, da trotz der Unmöglichkeit, dass zwei verschiedene Mischvorrichtungen nicht gleichzeitig oberhalb einer Streuvorrichtung positioniert werden können, dennoch eine jeweilige Streuvorrichtung als Materialpuffer für jene Zeitspanne, in welcher keine Materialzuführung stattfindet, fungieren kann. Die Mischvorrichtungen können bei dieser Ausgestaltungsvariante der Anlage beispielsweise karussell-artig angeordnet sein, sodass jede Mischvorrichtung jeweils zwischen einer Ausgabeposition oberhalb einer Streuvorrichtung und einer oder mehrerer Befüllposition(en) verstellbar angeordnet ist.

Es kann aber auch eine Ausgestaltung der Anlage sinnvoll sein, bei welcher wenigstens zwei verfahrbaren Streuvorrichtungen angeordnet sind, welche verfahrbaren Streuvorrichtungen zur Überführung von gemischten Ausgangsmaterialien aus einer jeweiligen Mischvorrichtung in eine jeweilige Beladungsposition verfahrbar sind, und welche verfahrbaren Streuvorrichtungen zum Aufbringen der gemischten Ausgangsmaterialien in eine jeweilige Streuposition oberhalb des Unterbandes oder des dem Unterband vorgelagerten Transportmittels verfahrbar sind.

Auch bei dieser Ausführungsform können Transportstrecken zwischen den Mischvorrichtungen und der oder den Streuvorrichtung(en) vermieden werden, und kann somit allfällig auftretenden Ablagerungen bzw. Verstopfungen besser vorgebeugt werden. Die Streuvorrichtung(en) können beispielsweise motorisch, pneumatisch oder hydraulisch angetrieben an entsprechenden Führungselementen, wie etwa Schienenführungen, angeordnet sein.

Es kann bei dieser Ausgestaltungsvariante der Anlage aber auch vorgesehen sein, dass die verfahrbaren Streuvorrichtungen in eine jeweilige Beladungsposition unterhalb einer Mischvorrichtung verfahrbar angeordnet sind.

Im Betrieb der Anlage ist hierdurch eine besonders einfache und gleichzeitig möglichst fehlerfreie und prozessstabile Überführung der gemischten Ausgangsmaterialien in eine jeweilige Streuvorrichtung durchführbar.

Des Weiteren kann bei der Ausgestaltungsvariante mit verfahrbar angeordneten Streuvorrichtungen auch eine Steuerungsvorrichtung vorgesehen sein, welche Steuerungsvorrichtung zum Beladen der Streuvorrichtungen mit gemischten Ausgangsmaterialien und zum Aufbringen der gemischten Ausgangsmaterialien auf das Unterband oder auf das dem Unterband vorgelagerte Transportmittel zur zeitlichen versetzten und koordinierten Durchführung der Verfahrbewegungen der verfahrbaren Streuvorrichtungen gemäß einer vierten Taktung ausgebildet ist.

Durch Vorsehen einer derart ausgebildeten Steuerungsvorrichtung können im Betrieb der Anlage Materiallücken auf dem Unterband oder dem vorgelagerten Transportmittel vermieden werden. Im Speziellen kann gemäß der vierten Taktung vorgesehen sein, dass zu jedem Zeitpunkt mittels einer Streuvorrichtung gemischte Ausgangsmaterialien auf das Unterband bzw. das vorgelagerte Transportmittel aufgebracht werden. Die Steuerungsvorrichtung kann zur Steuerung der verfahrbaren Streuvorrichtungen insbesondere auch derart ausgebildet sein, dass im Betrieb der Anlage zumindest zeitweise zumindest zwei Streuvorrichtungen gleichzeitig an unterschiedlichen Stellen bzw. Streupositionen die gemischten Ausgangsmaterialien auf das Unterband oder das vorgelagerte Transportmittel aufbringen.

Bei einer bevorzugten Ausgestaltungsform kann vorgesehen sein, dass die Streuvorrichtung(en) zur gleichmäßigen und homogenen Verteilung der gemischten Ausgangsmaterialien auf dem Unterband oder dem, dem Unterband vorgelagerten Transportmittel eine Vergleichmäßigungs-Vorrichtung, insbesondere in Form von entlang einer im Wesentlichen horizontalen Rotationsachse gelagerter, gegenläufig rotierbarer Walzen aufweisen.

Die Walzen können zudem zum Beispiel Schneckenprofile aufweisen, sodass auch eine Förderung der gemischten Ausgangsmaterialien in der oder den Streuvorrichtung(en) zwecks gleichmäßiger Verteilung möglich ist. Dies ist insbesondere dann von Vorteil, wenn die gemischten Ausgangsmaterialien an einer eng begrenzten Beladungsstelle in die Streuvorrichtung(en) eingebracht werden. Im Betrieb der Anlage können mittels einer derartigen Vergleichmäßigungs-Vorrichtung zum Beispiel auch etwaige Verklumpungen der Ausgangsmaterialien aufgebrochen werden, sodass die gemischten Ausgangsmaterialien in der oder den Streuvorrichtung(en) weiter homogenisiert, und in der Folge gleichmäßig verteilt auf das Unterband oder das vorgelagerte Transportmittel aufgebracht bzw. aufgestreut werden können. Alternativ oder zusätzlich können derartige Vergleichmäßigungs- bzw. Brechervorrichtungen auch einer Streuvorrichtung vorgeschaltet angeordnet sein.

Bei einer weiteren Ausgestaltungsform kann oder können in einer Transportrichtung für die Ausgangsmaterialien an dem Unterband vor einer Eintrittstelle zwischen Oberband und Unterband der Doppelbandpresse eine oder mehrere Vorverdichtungswalze(n) oder Vorverdichtungswalzenpaar(e) angeordnet sein.

Im Betrieb der Anlage kann die Doppelbandpresse selbst vor allem im Materialeintrittsbereich vor allzu großer Abrasion geschützt werden, da ein bereits vorverdichtetes Material in die Doppelbandpresse gelangen kann. In weiterer Folge kann auf diese Weise die Lebensdauer der Doppelbandpresse verlängert werden, bzw. können kostspielige Instandsetzungen der Doppelbandpresse möglichst hinausgezögert werden. Die Vorverdichtungswalze(n) bzw. - walzenpaar(e) können bei zu hoher Abrasion hingegen ohne großen Aufwand und verhältnismäßig kostengünstig ersetzt werden.

Schließlich kann bei einer Ausgestaltungsform der Anlage vorgesehen sein, dass die Steuerungsvorrichtung zumindest zur zeitlich koordinierten Steuerung einer Dosierung der Ausgangsmaterialien in die Mischvorrichtungen, Mischdauer in den Mischvorrichtungen, sowie zur Steuerung einer Aufbringungsgeschwindigkeit der gemischten Ausgangsmaterialien auf das Unterband oder das dem Unterband vorgelagerte Transportmittel, Bandgeschwindigkeit des Unterbandes und Pressdruck auf die gemischten Ausgangsmaterialien hinsichtlich jeweils gewünschter Dichte und Dicke der Kunststeinplatten ausgebildet ist.

Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel für eine Anlage zur kontinuierlichen Herstellung von Kunststeinplatten in Seitenansicht;
- Fig. 2a, 2b: zeitlich versetzte Momentaufnahmen im Betrieb einer Anlage zur kontinuierlichen Herstellung von Kunststeinplatten;
- Fig. 3: ein Ausführungsbeispiel für eine Anlage zur kontinuierlichen Herstellung von Kunststeinplatten in Draufsicht von oben;
- Fig. 4: ein Ausführungsbeispiel für eine Streuvorrichtung in Schnittansicht;
- Fig. 5: ein weiteres Ausführungsbeispiel für eine Anlage zur kontinuierlichen Herstellung von Kunststeinplatten in Draufsicht von oben;
- Fig. 6: ein weiteres Ausführungsbeispiel für eine Anlage zur kontinuierlichen Herstellung von Kunststeinplatten in Draufsicht von oben;
- Fig. 7a-7d: zeitlich versetzte Momentaufnahmen im Betrieb einer Anlage zur kontinuierlichen Herstellung von Kunststeinplatten;
- Fig. 8a-8e: zeitlich versetzte Momentaufnahmen im Betrieb einer Anlage zur kontinuierlichen Herstellung von Kunststeinplatten;
- Fig. 9: ein weiteres Ausführungsbeispiel für eine Anlage zur kontinuierlichen Herstellung von Kunststeinplatten in Seitenansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

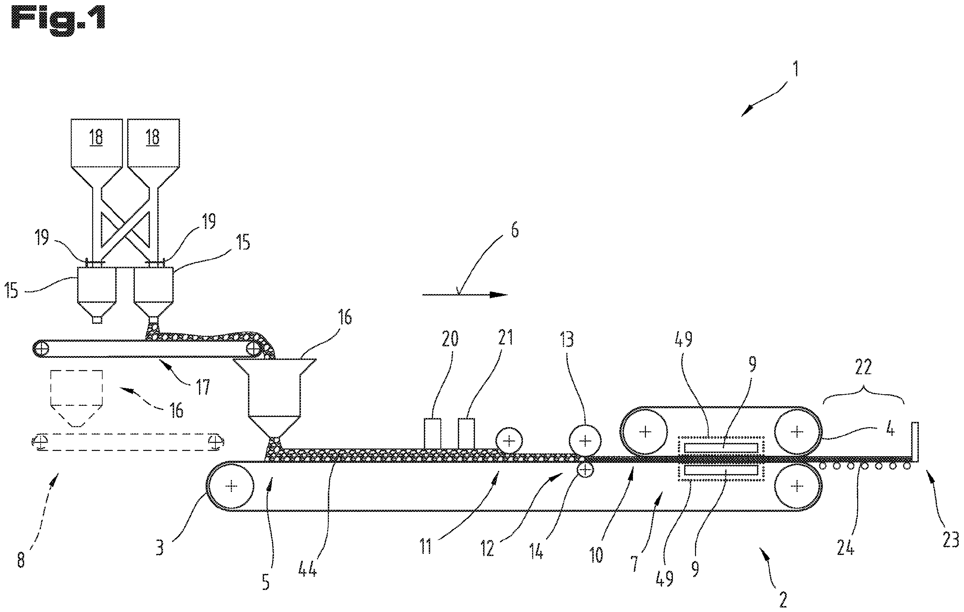

In der Fig. 1 ist Anlage 1 zur kontinuierlichen Herstellung von Kunststeinplatten dargestellt. Gemäß dem dargestellten Ausführungsbeispiel umfasst die Anlage 1 eine Doppelbandpresse 2 mit einem Unterband 3 und einem Oberband 4. Wie aus der Fig. 1 weiters ersichtlich ist, weist das Unterband 3 eine größere Länge auf als das Oberband 4, und ist gegenüber dem Oberband 4 versetzt angeordnet, sodass zu verpressende Materialien bzw. Ausgangsmaterialien in einem Materialaufbringungsbereich 5 auf das Unterband 3 aufgebracht, und anschließend in einer Transportrichtung 6 in einen Bearbeitungsbereich 7 zwischen dem Unterband 3 und dem Oberband 4 transportiert werden können. Alternativ zu einer Aufbringung der zu verpressenden Materialien auf das Unterband 3, können die Ausgangsmaterialien auch auf ein dem Unterband 3 in Transportrichtung 6 vorgelagertes Transportmittel 8 aufgebracht werden, wie dies links in der Fig. 1 mittels strichlierten Linien veranschaulicht ist. Ein solches dem Unterband 3 vorgelagertes Transportmittel kann zum Beispiel durch ein separates Förderband gebildet sein. Eine Länge des Unterbandes 3 kann in solchen Fall kürzer gewählt werden. Im Betrieb der Anlage 1 werden das Unterband 3 und gegebenenfalls das vorgelagerte Transportmittel 8 kontinuierlich bewegt, sodass aufgebrachte Ausgangsmaterialien in Transportrichtung 6 befördert bzw. transportiert werden.

Des Weiteren umfasst die Doppelbandpresse zumindest ein Heizmittel 9 zum Erhitzen von zwischen dem Unterband 3 und dem Oberband 4 geförderten Materialien, wobei bei dem Ausführungsbeispiel gemäß Fig. 1 zwei Heizmittel 9 zum Erhitzen der zu verpressenden Materialien bzw. Ausgangsmaterialien von oben und von unten angeordnet sind. Die Heizmittel 9 können zum Beispiel durch Widerstandsheizelemente, oder durch von einem Heizfluid durchströmte Heizelemente gebildet sein.

Wie außerdem aus Fig. 1 ersichtlich ist, kann oder können in Transportrichtung 6 für die Ausgangsmaterialien an dem Unterband 3 vor einer Eintrittsstelle 10 zwischen Oberband 4 und Unterband 3 der Doppelbandpresse 2 eine oder mehrere Vorverdichtungswalze(n) 11 oder Vorverdichtungswalzenpaar(e) 12 angeordnet sein. Wie dargestellt kann ein Vorverdichtungswalzenpaar 12 aus einer Verdichtungswalze 13 und einer im Verhältnis kleineren Gegendruckwalze 14 bestehen, wobei die Verdichtungswalze 13 abrasionsfest ausgebildet sein kann, beispielsweise verchromt oder gummiert sein oder eine abrasionsfeste Kunststeinschicht aufweisen kann. Im Betrieb der Anlage 1, können die auf das Unterband 3 aufgebrachten Ausgangsmaterialien vor dem Eintritt zwischen Oberband 4 und Unterband 3 der Doppelbandpresse 2 mittels solcher oder mehrerer Vorverdichtungswalze(n) 11 oder Vorverdichtungswalzenpaar(e) 12 verdichtet werden, sodass die Doppelbandpresse 2 selbst insbesondere an der Eintrittsstelle 10 vor allzu großem Abrieb geschützt werden kann. Ein Ausmaß der Vorverdichtung kann hierbei durchaus sehr hoch gewählt werden, und kann zum Beispiel 70 % oder mehr, insbesondere 90 % oder mehr bezogen auf die Endverdichtung der Ausgangsmaterialien nach dem Durchtritt durch die Doppelbandpresse, betragen.

Vor dem Eintritt in die Doppelbandpresse 2 bzw. vor dem Vorverdichten werden die Ausgangsmaterialien gemischt und auf das Unterband 3 oder das vorgelagerte Transportmittel 8 aufgebracht. Wie in der Fig. 1 dargestellt, sind zum Mischen der Ausgangsmaterialien mindestens zwei separat angeordnete und für Batch-Mischbetrieb ausgestaltete Mischvorrichtungen 15 angeordnet. Die Mischvorrichtungen 15 können beispielsweise durch sogenannte Gleichlaufmischer gebildet sein. Des Weiteren ist oder sind eine oder mehrere zur kontinuierlichen Beschickung des Unterbandes 3 oder eines dem Unterband 3 vorgelagerten Transportmittels 8 mit gemischten Ausgangsmaterialien ausgebildete Streuvorrichtung(en) 16 angeordnet, wobei bei dem Ausführungsbeispiel gemäß Fig. 1 lediglich eine Streuvorrichtung 16 dargestellt ist. Wie ebenfalls veranschaulicht, werden mittels der oder den Streuvorrichtung(en) 16 die jeweils gemischten Ausgangsmaterialien auf das Unterband 3 der Doppelbandpresse 2 oder das dem Unterband 3 vorgelagerte Transportmittel 8 aufgebracht bzw. gestreut. Die so erzeugte Ausgangsmaterialschicht 44 wird im Betrieb der Anlage 1 fortwährend mittels dem kontinuierlich bewegten Unterband 3 und gegebenenfalls dem Transportmittel 8 in Transportrichtung 6 gefördert.

Außerdem ist wenigstens ein Mittel 17 zum Transfer von gemischten Ausgangsmaterialien aus den mindestens zwei Mischvorrichtungen 15 in die Streuvorrichtung(en) 16 vorgesehen. Bei dem Ausführungsbeispiel gemäß Fig. 1 ist ein gemeinsames Mittel 17 zum Transfer der gemischten Ausgangsmaterialien aus beiden Mischvorrichtungen 15 in die dargestellte Streuvorrichtung 16 schematisch dargestellt, wobei das Mittel 17 in diesem Fall durch ein Förderband gebildet ist. Wie nachfolgend beschrieben wird, können auch andere physische Mittel 17 zum Transfer von gemischten Ausgangsmaterialien vorgesehen sein, wie etwa Materialrutschen oder -schläuche. Außerdem ist es möglich, dass das Mittel zum Transfer von gemischten Ausgangsmaterialien durch die Schwerkraft bzw. Erdanziehungskraft gebildet ist, indem verstellbare Mischvorrichtungen 15 oberhalb einer Streuvorrichtung16 positioniert werden, oder verfahrbare Streuvorrichtungen 16 unterhalb von Mischvorrichtungen 15 positioniert werden.

Jeder Streuvorrichtung 16 kann zumindest eine Mischvorrichtung 15 funktionstechnisch zugeordnet sein, wobei gemäß dem in der Fig. 1 dargestellten Ausführungsbeispiel die zwei vorgesehenen Mischvorrichtungen 15 einer einzelnen Streuvorrichtung 16 funktionstechnisch zugeordnet sind. Es versteht sich von selbst, dass eine Anlage 1 auch mehr als zwei Mischvorrichtungen 15 und mehr als eine Streuvorrichtung 16 umfassen kann, wobei wiederum jeder Streuvorrichtung 16 zumindest eine Mischvorrichtung 15 funktionstechnisch zugeordnet sein kann. Durch Vergrößerung der Anzahl an Mischvorrichtungen 15 bzw. Streuvorrichtungen 16 kann insbesondere eine größere Menge an gemischten Ausgangsmaterialien pro Zeiteinheit auf das Unterband 3 oder das vorgelagerte Transportmittel 8 aufgebracht werden, wodurch zum Beispiel Kunststeinplatten mit größerer Plattendicke produziert werden können.

Wie im Ausführungsbeispiel gemäß Fig. 1 dargestellt ist, umfasst die Anlage 1 ein oder mehrere Vorratsbehältnis(se) 18 zur Beinhaltung bzw. Zwischenlagerung von Ausgangsmaterialien, wobei ein Vorratsbehältnis 18 zur gemeinsamen Aufbewahrung mehrerer Ausgangsmaterialien ausgestaltet sein kann, oder mehrere Vorratsbehältnisse 18 zur separaten Aufbewahrung je eines Ausgangsmaterials vorgesehen sein können. Außerdem können Dosiervorrichtungen 19, beispielweise verstellbare Ventile oder Klappen zur Zudosierung der Ausgangsmaterialien aus dem oder den Vorratsbehältnis(sen) 18 in die Mischvorrichtungen 15 angeordnet sein. Bei dem in der Fig. 1 dargestellten Ausführungsbeispiel sind zwei Vorratsbehältnisse 18 vorgesehen, aus welchen die Ausgangsmaterialien einer jeweiligen Mischvorrichtung 15 zugeführt werden können.

Des Weiteren können zum Beispiel noch ein Pflug 20 zur Verteilung der Ausgangsmaterialien auf dem Unterband 3, sowie eine Rakel 21 zur Glättung der Ausgangsmaterialien auf dem Unterband 3 angeordnet sein. Wie in der Fig. 1 dargestellt ist, kann die Anlage 1 des Weiteren in Transportrichtung 6 nach der Doppelbandpresse 2 noch eine Abkühlzone 22, sowie wie an sich bekannt eine Vereinzelungsvorrichtung, beispielsweise eine Schneidvorrichtung 23 umfassen. Eine Schneidvorrichtung 23 kann hierbei eine oder mehrere Sägevorrichtungen umfassen. Zum Beispiel kann zumindest eine solche Sägevorrichtung zum Zerteilen eines Materialstranges 24 aus verpressten und ausgehärteten Ausgangsmaterialien quer zur Transportrichtung 6 vorgesehen sein, um Kunststeinplatten mit jeweils gewünschter Plattenlänge zu erhalten. Zusätzlich können aber auch Sägevorrichtungen vorgesehen sein, welche entweder zum Besäumen oder zum Zerteilen eines nach dem Durchtritt durch die Doppelbandpresse 2 erhaltenen Materialstranges 24 in Transportrichtung 6 vorgesehen sind. Dies zum Beispiel um Kunststeinplatten mit jeweils gewünschter Plattenbreite zu erhalten.

Wie schematisch ebenfalls aus der Fig. 1 erkennbar ist, umfasst das Verfahren zur kontinuierlichen Herstellung von Kunststeinplatten die Schritte
- Bereitstellen von Ausgangsmaterialien umfassend zumindest einen mineralischen Füllstoff und zumindest ein organisches Bindemittel,
- Mischen der Ausgangsmaterialien,
- Aufbringen der gemischten Ausgangsmaterialien auf ein kontinuierlich bewegtes Unterband 3 einer Doppelbandpresse 2 oder ein dem Unterband 3 in Transportrichtung 6 vorgelagertes, kontinuierlich bewegtes Transportmittel 8,

- kontinuierliches Verpressen der gemischten Ausgangsmaterialien zur einem verpressten Materialstrang 24,
- Härten des organischen Bindemittels,
- und Vereinzeln des Materialstranges 24 zu Kunststeinplatten.

Als Ausgangsmaterial mineralischer Füllstoff können zum Beispiel Quarz-Granulat bzw. Quarzsand, Quarzit, Steinmaterial, Marmormehl, etc. oder aus Mischungen von mineralischen Füllstoffen. Der oder die mineralische(n) Füllstoff(e) können zum Beispiel in granulärer oder pulverförmiger Form eingesetzt werden, und sind insbesondere rieselfähig. Als Ausgangsmaterial organisches Bindemittel können zum Beispiel polymerisierbare bzw. chemisch härtbare Harze, wie etwa Polyester-, Polyurethan-, Epoxid-, oder Phenolharze bereitgestellt werden, wobei auch Mehrkomponentensysteme, welche zum Beispiel Vernetzungsmittel bzw. Härter oder Beschleuniger enthalten können, zum Einsatz kommen können. Das organische Bindemittel bzw. dessen Komponenten können grundsätzlich sowohl in flüssiger als auch in fester, beispielsweise granulärer oder pulverförmiger Form bereitgestellt werden. Des Weiteren können zusätzliche Stoffe als Ausgangsmaterialien beigemengt werden, beispielsweise Pigmente, Farbstoffe, Biozide oder weitere Füllmaterialien, wie etwa Glasbruchstücke.

Das Mischen der Ausgangsmaterialien wird mittels mindestens zwei separaten Mischvorrichtungen 15 zeitlich versetzt gemäß einer ersten vorgegebenen bzw. vorgebbaren Taktung im Batch-Mischbetrieb durchgeführt, wobei den mindestens zwei Mischvorrichtungen 15 vor Beginn eines jeweiligen Batch-Mischvorgangs eine definierte Menge der Ausgangsmaterialien zugeführt wird.

Die gemischten Ausgangsmaterialien aus den mindestens zwei Mischvorrichtungen 15 werden zeitlich versetzt gemäß einer zweiten Taktung in eine oder mehrere Streuvorrichtung(en) 16 überführt. Mittels der oder den Streuvorrichtung(en) 16 werden die gemischten Ausgangsmaterialien kontinuierlich und ununterbrochen auf das Unterband 3 oder das dem Unterband 3 vorgelagerte Transportmittel 8 aufgebracht.

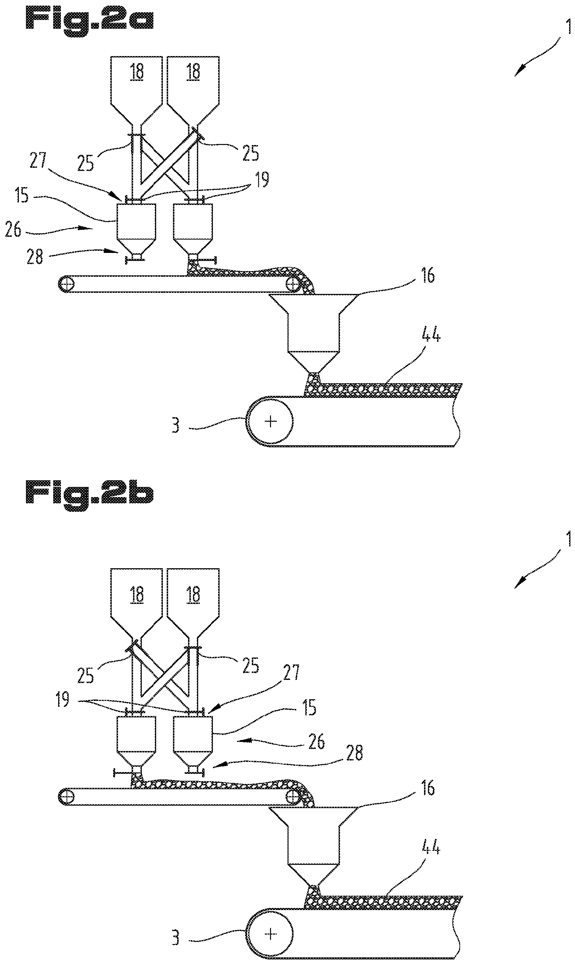

In den Fig. 2a und 2b ist ein Ausführungsbeispiel für das getaktete Mischen anhand von 2 zeitlich versetzten Momentaufnahmen des Betriebes der Anlage gemäß dem in der Fig. 1 gezeigten Ausführungsbeispiel dargestellt.

Wie anhand der in der Fig. 2a dargestellten Momentaufnahme ersichtlich ist, werden gemischte Ausgangsmaterialien gerade gemäß der zweiten Taktung aus der rechterhand dargestellten Mischvorrichtung 15 via das Mittel 17 zum Transfer der gemischten Ausgangsmaterialien in die dargestellte Streuvorrichtung 16 überführt, und mittels der Streuvorrichtung 16 unter Ausbildung einer Ausgangsmaterialschicht 44 auf das Unterband 3 aufgebracht. Währenddessen werden die Ausgangsmaterialien in der linkerhand dargestellten Mischvorrichtung 15 gemäß der ersten Taktung gerade gemischt. Alternativ könnte gemäß der Momentaufnahme in Fig. 2a vorgesehen sein, dass gerade gemäß einer dritten Taktung Ausgangsmaterialien aus den Vorratsbehältnissen 18 in die linkerhand dargestellte Mischvorrichtung 15 gefüllt werden und erst anschließend der Mischvorgang gemäß der zweiten Taktung gestartet wird. Bei dem in der Fig. 2a dargestellten Ausführungsbeispiel können beispielsweise Umschaltklappen 25 zum Umschalten der Befüllstrecken von den Vorratsbehältnissen 18 auf jeweils eine der beiden Mischvorrichtungen 15 eingesetzt werden.

In der Fig. 2b ist eine zu der Momentaufnahme gemäß Fig. 2a im Betrieb der Ablage 1, zeitlich versetzte Momentaufnahme dargestellt. Wie ersichtlich ist, werden in dieser Momentaufnahme gemischte Ausgangsmaterialien gerade gemäß der zweiten Taktung aus der linkerhand dargestellten Mischvorrichtung 15 via das Mittel 17 zum Transfer der gemischten Ausgangsmaterialien in die dargestellte Streuvorrichtung 16 überführt, und mittels der Streuvorrichtung 16 auf das Unterband 3 aufgebracht. Währenddessen werden die Ausgangsmaterialien in der rechterhand dargestellten Mischvorrichtung 15 gemäß der ersten Taktung gerade gemischt. Alternativ könnte gemäß der Momentaufnahme in Fig. 2b wiederum vorgesehen sein, dass gerade gemäß der dritten Taktung Ausgangsmaterialien aus den Vorratsbehältnissen 18 in die rechterhand dargestellte Mischvorrichtung 15 gefüllt werden und erst anschließend der Mischvorgang gemäß der zweiten Taktung gestartet wird.

Wie durch Zusammenschau der Fig. 2a und 2b erkennbar ist, können bei dem hierin dargestellten Ausführungsbeispiel jeweils abwechselnd gemäß der ersten Taktung Ausgangsmaterialien in den Mischvorrichtungen 15 gemischt, und ebenso jeweils abwechselnd gemischte Ausgangsmaterialien gemäß der zweiten Taktung in die Streuvorrichtung 16 überführt werden. Es versteht sich von selbst, dass die erste, zweite und dritte Taktung in einer Weise festgelegt sein können, dass sich einzelne Mischvorgänge in unterschiedlichen Mischvorrichtungen 15 gemäß der ersten Taktung, sowie einzelne Überführungsvorgänge von unterschiedlichen Mischvorrichtungen 15 in eine oder mehrere Streuvorrichtung(en) 16 auch zumindest teilweise zeitlich überlappen können, also zumindest zeitweise gleichzeitig ausgeführt werden können. Dies insbesondere dann, wenn mehr als eine Streuvorrichtung 16 und mehr als zwei Mischvorrichtungen 15 eingesetzt werden. Selbiges gilt natürlich für die Zuführung der Ausgangsmaterialien in die Mischvorrichtungen 15 gemäß der dritten Taktung. Die jeweiligen Startpunkte und Zeitdauern der einzelnen Zuführungs- Misch- und Überführungsvorgänge gemäß den Taktungen können vorzugsweise jeweils derart festgelegt bzw. vorgegeben werden, sodass auf dem Unterband 3 keine Materiallücken entstehen.

In den Fig. 2a und 2b außerdem dargestellt können die Mischvorrichtungen 15 jeweils ein Gehäuse 26 mit einer verschließbaren Einlassöffnung 27 und einer verschließbaren Auslassöffnung 28 aufweisen. Im Betrieb der Anlage kann sodann vorgesehen sein, dass die Mischvorrichtungen 15 über eine Einlassöffnung 27 mit den Ausgangsmaterialien beschickt werden, und die gemischten Ausgangsmaterialien aus den Mischvorrichtungen 15 über eine Auslassöffnung 28 geleert werden, wobei für das Mischen die Einlassöffnung 27 und die Auslassöffnung 28 geschlossen werden. Auf diese Weise kann das Mischen jeweils in einem geschlossenen Gehäuse 26 der Mischvorrichtungen 15 durchgeführt werden.

Verschiedene weitere Aspekte einer Anlage 1 bzw. eines Verfahrens zur kontinuierlichen Herstellung von Kunststeinplatten werden nachfolgend anhand weiterer Ausführungsbeispiele näher erläutert.

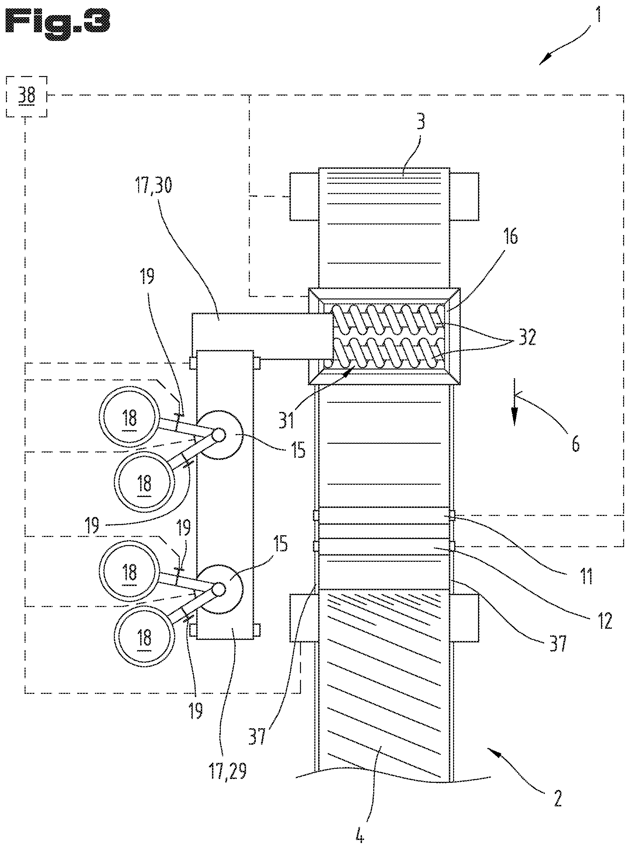

In der Fig. 3 ist ein Ausführungsbeispiel für eine Anlage 1 zur kontinuierlichen Herstellung von Kunststeinplatten in Draufsicht von oben dargestellt. In der Fig. 3 werden für gleiche Teile gleiche Bezugszeichen bzw. Bauteilbezeichnungen wie in den vorangegangenen Fig. 1-2 verwendet. Um unnötige Wiederholungen zu vermeiden, wird auf die detaillierte Beschreibung in den vorangegangenen Fig. 1-2 hingewiesen bzw. Bezug genommen.

Wie in Fig. 3 ersichtlich ist, können bei einer Anlage 1 mindestens zwei ortsfest angeordnete Mischvorrichtungen 15 sowie wenigstens eine ortsfest oberhalb des Unterbands 3 angeordnete Streuvorrichtung 16 vorgesehen sein. Alternativ kann auch wenigstens eine ortsfest oberhalb eines dem Unterband 3 vorgelagerten Transportmittels 8 angeordnete Streuvorrichtung 16 vorgesehen sein, wie dies in der Fig. 1 strichliert dargestellt ist. Zur Überführung von gemischten Ausgangsmaterialien von den Mischvorrichtungen 15 in die wenigstens eine ortsfest angeordnete Streuvorrichtung 16 kann zumindest ein physisches Mittel 17 zum Transfer von gemischten Ausgangsmaterialien, insbesondere ein Förderband 29, eine Materialrutsche 30 oder -schlauch angeordnet sein.

Bei dem dargestellten Ausführungsbeispiel sind seitlich des Unterbandes 3 der Doppelbandpresse 2 zwei Mischvorrichtungen 15 ortsfest angeordnet. Den Mischvorrichtungen 15 können wie dargestellt jeweils 2 Vorratsbehältnisse 18 zum Zuführen der Ausgangsmaterialien zugeordnet sein, wobei zum Beispiel je ein Vorratsbehältnis 18 zur Aufbewahrung bzw. Zwischenlagerung von mineralischem Füllstoff und das jeweils andere Vorratsbehältnis 18 zur Aufbewahrung von organischem Bindemittel vorgesehen sein kann. Des Weiteren kann eine ortsfest über dem Unterband 3 angeordnete Streuvorrichtung 16 vorgesehen sein.

Im Betrieb der Anlage können die gemischten Ausgangsmaterialien aus den mindestens zwei ortsfest angeordneten Mischvorrichtungen 15 der wenigstens einen ortsfest oberhalb des Unterbands 3 oder ortsfest oberhalb des dem Unterband 3 vorgelagerten Transportmittels 8, siehe Fig. 1, angeordneten Streuvorrichtung 16 über das zumindest eine physische Mittel 17 zum Transfer von gemischten Ausgangsmaterialien, insbesondere ein Förderband 29, eine Materialrutsche 30 oder einen -schlauch zugeführt werden.

Zum Überführen der gemischten Ausgangsmaterialien aus den Mischvorrichtungen 15 sind gemäß dem dargestellten Ausführungsbeispiel zwei Mittel 17 zum Transfer vorgesehen. Wie dargestellt können die gemischten Ausgangsmaterialien im Betrieb der Anlage 1 zuerst via ein Förderband 29 zu einer Materialrutsche 30 und sodann über die Materialrutsche 30 in die Streuvorrichtung 16 überführt werden.

Selbstverständlich sind auch andere Anordnungen mit ortsfest angeordneten Mischvorrichtungen 15 und Streuvorrichtungen 16, sowie Mittel 17 zum Transfer von gemischten Ausgangsmaterialien als jene wie in Fig. 3 dargestellt denkbar. Beispielsweise ist eine Anordnung möglich, bei welcher zu beiden Seiten des Unterbandes 3 jeweils eine Mischvorrichtung 15 angeordnet ist, und dass die gemischten Ausgangsmaterialien jeweils über ein physisches Mittel 17 wechselweise von den Mischvorrichtungen 15 in die Streuvorrichtung 16 überführt werden. Des Weiteren ist natürlich auch eine Anlage 1 mit mehr als einer ortsfest über dem Unterband 3 oder einem dem Unterband 3 in Transportrichtung 6 vorgelagerten Transportmittel 8, sowie mit mehr als zwei ortsfest angeordneten Mischvorrichtungen 15 denkbar.

Wie anhand der Fig. 3 außerdem ersichtlich ist, kann die Streuvorrichtung 16 bzw. können gegebenenfalls die Streuvorrichtungen 16 zur gleichmäßigen und homogenen Verteilung der gemischten Ausgangsmaterialien auf dem Unterband 3 oder einem, dem Unterband 3 vorgelagerten Transportmittel 8 eine Vergleichmäßigungs-Vorrichtung 31, insbesondere in Form von entlang einer im Wesentlichen horizontalen Rotationsachse gelagerter, gegenläufig rotierbarer Walzen 32 aufweisen. Die gegenläufig rotierbaren Walzen 32 können zur Förderung der gemischten Ausgangsmaterialien in einer Streuvorrichtung 16 jeweils zusätzlich je ein Schneckenprofil aufweisen, wie dies ebenfalls aus der Fig. 3 ersichtlich ist. Eine derart ausgestaltete Vergleichmäßigungs-Vorrichtung 31 kann zusätzlich zur gleichmäßigen Verteilung der gemischten Ausgangsmaterialien auf dem Unterband 3 oder einem vorgelagerten Transportmittel auch beispielweise zur besseren Homogenisierung der gemischten Ausgangsmaterialien, beispielsweise durch Brechen von Verklumpungen dienen. Im Betrieb der Anlage 1 können die gemischten Ausgangsmaterialien während dem Aufbringen auf das Unterband 3 der Doppelbandpresse 2 oder auf das dem Unterband 3 vorgelagerte Transportmittel 8 in der oder den Streuvorrichtung(en) 16 mittels einer solchen Vergleichmäßigungs-Vorrichtung 31 gleichmäßig und homogen auf das Unterband 3 oder das dem Unterband 3 vorgelagerte Transportmittel 8 verteilt werden. Alternativ oder zusätzlich können derartige Vergleichmäßigungs- bzw. Brechervorrichtungen 31 auch einer Streuvorrichtung 16 vorgeschaltet angeordnet sein.

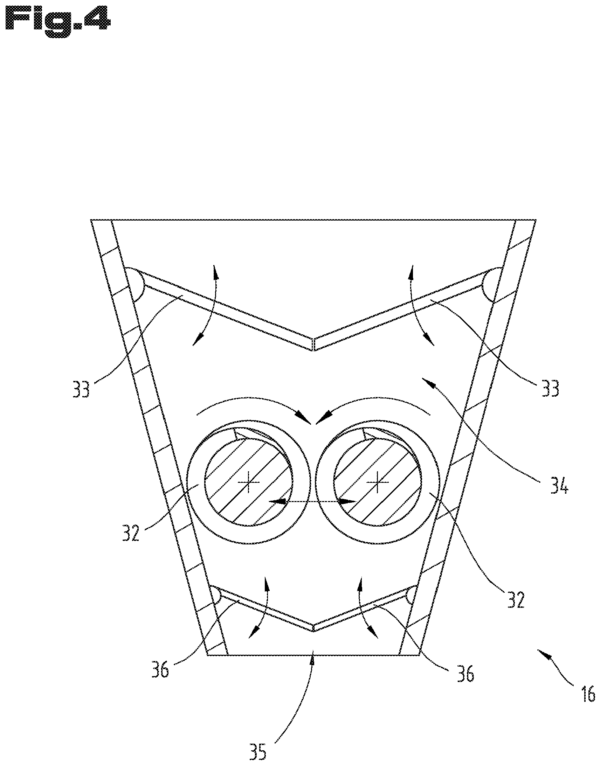

In der Fig. 4 ist eine mögliche Ausgestaltungsform einer Streuvorrichtung 16 in Schnittansicht dargestellt. Eine Streuvorrichtung 16 kann insbesondere trichterförmig ausgestaltet sein. Wie anhand des Doppelpfeiles in der Fig. 4 veranschaulicht, können die Walzen 32 der Vergleichmäßigungs-Vorrichtung 31 gegeneinander verstellbar gelagert sein, sodass ein Spalt zwischen den Walzen 32 vergrößert oder verkleinert werden kann. Dies stellt ein Mittel zur dosierten Streuung bzw. Aufbringung der gemischten Ausgangsmaterialien auf das Unterband 3 oder Transportmittel 8 dar. Des Weiteren kann eine Streuvorrichtung 16 verstellbare Stellklappen 33 aufweisen, welche insbesondere derart dimensioniert und angeordnet sein können, dass eine Streuvorrichtung 16 über ihren gesamten Innenumfang in einer Schließstellung 34 der Stellklappen 33 geschlossen werden kann. In der Schließstellung 34 der Stellklappen 33 kann kein gemischtes Ausgangsmaterial auf das Unterband 3 oder Transportmittel 8 gelangen, und kann ein Start-Zeitpunkt eines Aufbring- bzw. Streuvorganges im Betrieb der Anlage 1 somit gezielt gesteuert werden. Des Weiteren kann hierdurch eintragsseitig einer Streuvorrichtung 16 ein Materialpuffer an gemischten Ausgangsmaterialien gebildet werden. Schließlich können wie anhand der Fig. 4 ersichtlich an einer Austragsseite 35 einer Streuvorrichtung 16 weitere Stellklappen 36 vorgesehen sein. Mittels solcher weiteren Stellklappen 36 kann einerseits die auf das Unterband 3 oder das vorgelagerte Transportmittel 8 pro Zeiteinheit aufgebrachte bzw. gestreute Menge an gemischten Ausgangsmaterialien beeinflusst bzw. gesteuert werden. Außerdem kann hierdurch auch in einem Austragsbereich der Streuvorrichtung 16 ein Materialpuffer umfassend bereits aufgelockerte bzw. aufgebrochene, gemischte Ausgangsmaterialien, bereitgestellt werden.

Zurückkommend zu Fig. 3, können zu beiden Seiten des Unterbandes 3 der Doppelbandpresse 2 Seitenbegrenzungen 37 angeordnet sein, um ein Hinunterfallen von gemischten Ausgangsmaterialien von dem Unterband 3 hintanzuhalten. Solche Seitenbegrenzungen 37 können zum Beispiel durch fest installierte, mit dem Unterband 3 verbundene und mitbewegte oder ortsfest installierte und nicht mit dem Unterband 3 verbundene, beispielsweise schwebend angeordnete Randleisten gebildet sein. Insbesondere im Bereich von Vorverdichtungswalzen 11 oder -walzenpaaren 12 können solche Seitenbegrenzungen 37 ein Auswichen der gemischten Ausgangsmaterialien über das Unterband 3 hinweg verhindern, sodass die gemischten Ausgangsmaterialien in solchen Pressbereichen vornehmlich durch Hinauspressen bzw. Entweichen von Luft verdichtet werden können.

Im Betrieb der in Fig. 3 dargestellten Anlage 1 werden die Ausgangsmaterialien in den Mischvorrichtungen 15 wiederum gemäß einer ersten Taktung gemischt, und gemäß einer zweiten Taktung in die Streuvorrichtung 16 überführt. Zur Steuerung dieser Taktungen und auch zur Steuerung von weiteren Vorgängen bzw. Anlagenkomponenten wird wie in der Fig. 3 dargestellt eine Steuerungsvorrichtung 38 eingesetzt. Wie angedeutet kann eine Steuerungsvorrichtung 38 hierzu mit verschiedenen Komponenten der Anlage 1 bzw. Antrieben für die Komponenten signaltechnisch verbunden sein.

Erfindungsgemäß ist vorgesehen, dass eine solche Steuerungsvorrichtung 38 zur zeitlichen versetzten Durchführung von Mischvorgängen in den Mischvorrichtungen 15 gemäß einer ersten Taktung, sowie zur zeitlichen versetzten Durchführung von Überführungsvorgängen der gemischten Ausgangsmaterialien von den Mischvorrichtungen 15 in die Streuvorrichtung(en) 16 gemäß einer zweiten Taktung ausgebildet ist. Wie veranschaulicht kann die Steuerungsvorrichtung 38 hierzu mit Antrieben für Öffnungs- und Schließkomponenten der Mischvorrichtungen 15 und Streuvorrichtung(en) 16, sowie mit Mischaggregaten der Mischvorrichtungen 15 signalverbunden sein.

Wie aus Fig. 3 ersichtlich ist, kann die Steuerungsvorrichtung 38 aber auch zur Steuerung von weiteren Komponenten und Vorgängen ausgebildet sein, bzw. mit weiteren Anlagenkomponenten zwecks deren Ansteuerung signalverbunden sein. Im Speziellen kann die Steuerungsvorrichtung 38 zumindest zur zeitlich koordinierten Steuerung einer Dosierung der Ausgangsmaterialien in die Mischvorrichtungen 15, Mischdauer in den Mischvorrichtungen 15, sowie zur Steuerung einer Aufbringungsgeschwindigkeit der gemischten Ausgangsmaterialien bzw. der pro Zeiteinheit auf das Unterband 3 oder das dem Unterband vorgelagerte Transportmittel 8 aufgebrachten Menge an Ausgangsmaterialien, Bandgeschwindigkeit des Unterbandes 8 und Pressdruck auf die gemischten Ausgangsmaterialien hinsichtlich jeweils gewünschter Dichte und Dicke der Kunststeinplatten ausgebildet sein. Des Weiteren kann die Steuerungsvorrichtung 38 zur Anpassung einer Temperatur der gemischten Ausgangsmaterialien im Betrieb der Anlage 1 ausgebildet sein, zum Beispiel durch entsprechende Ansteuerung der in Fig. 1 dargestellten Heizmittel 9.

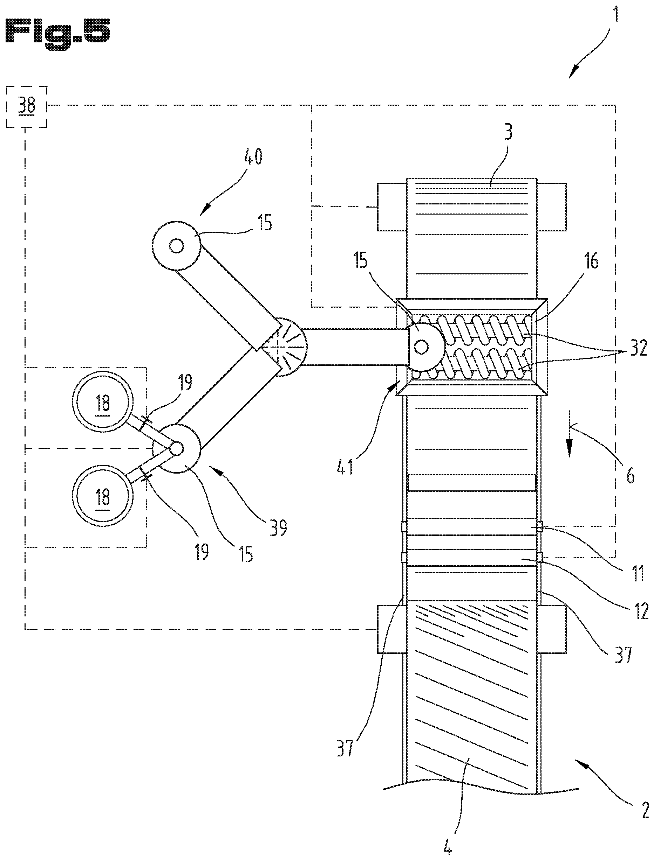

In der Fig. 5 ist eine weitere und gegebenenfalls für sich eigenständige Ausgestaltungsvariante einer Anlage 1 zur kontinuierlichen Herstellung von Kunststeinplatten dargestellt. Es werden in der Fig. 5 für gleiche Teile gleiche Bezugszeichen bzw. Bauteilbezeichnungen wie in den vorangegangenen Fig. 1-4 verwendet. Um unnötige Wiederholungen zu vermeiden, wird auf die detaillierte Beschreibung in den vorangegangenen Fig. 1-4 hingewiesen bzw. Bezug genommen.

Gemäß dem in der Fig. 5 dargestellten Ausführungsbeispiel kann vorgesehen sein, dass mindestens zwei verstellbare Mischvorrichtungen 15 und wenigstens eine ortsfest oberhalb des Unterbandes 3 oder oberhalb des dem Unterband 3 vorgelagerten Transportmittels 8 angeordnete Streuvorrichtung 16 vorgesehen sind, wobei eine jeweilige Mischvorrichtung 15 in eine Auslassposition oberhalb der wenigstens einen Streuvorrichtung 16 verstellbar angeordnet ist. Bei dem in der Fig. 5 dargestellten Ausführungsbeispiel sind insgesamt drei verstellbare Mischvorrichtungen 15 angeordnet, wobei das Verfahren selbsterklärend auch mit zwei oder mehr als 3 Mischvorrichtungen durch entsprechende Anpassung der ersten respektive zweiten Taktung für die Mischvorgänge respektive die Überführungsvorgänge von gemischten Ausgangsmaterialien in die Streuvorrichtung 16 durchführbar ist.

Wie in der Fig. 5 dargestellt ist, können die drei Mischvorrichtungen 15 karussellartig angeordnet sein, sodass jede Mischvorrichtung alternierend bzw. in einer zeitlich versetzten Abfolge von einer Befüllposition 39 bei einem oder mehreren Vorratsbehältnis(sen) 18, einer Mischposition 40 und einer Überführungsposition 41 zum Überführen von gemischten Ausgangsmaterialien in die Streuvorrichtung 16, beispielsweise oberhalb der Streuvorrichtung 16 verstellt werden kann. Bei einer alternativen Ausgestaltungsvariante der Anlage 1 mit zwei Mischvorrichtungen 15, könnte zum Beispiel vorgesehen sein, dass eine Mischvorrichtung 15 während eines Mischvorganges in der Befüllposition 39 verbleibt. Die Mischvorgänge und Überführungsvorgänge können jeweils wieder gemäß entsprechender erster vorgebbarer respektive zweiter vorgebbarer Taktungen durchgeführt werden.

Im Betrieb des Ausführungsbeispiels der Anlage 1 gemäß Fig. 5 können sodann die Ausgangsmaterialien mittels mindestens zwei verstellbaren Mischvorrichtungen 15 gemischt werden, wobei eine jeweilige verstellbare Mischvorrichtung 15 zum Überführen der gemischten Ausgangsmaterialien in die wenigstens eine ortsfest oberhalb des Unterbandes 3 oder oberhalb des dem Unterband 3 vorgelagerten Transportmittels 8 angeordnete Streuvorrichtung 16, jeweils in eine Überführungsposition 41 oberhalb der wenigstens einen Streuvorrichtung 16 verstellt werden kann.

Bei Einsatz lediglich einer Streuvorrichtung 16 können natürlich nicht 2 Mischvorrichtungen 15 gleichzeitig eine Überführungsposition 41 oberhalb der Streuvorrichtung 16 einnehmen und gemischte Ausgangsmaterialien in die Streuvorrichtung 16 überführen. Jedoch kann bei entsprechender Ausgestaltung der Streuvorrichtung 16, beispielsweise gemäß der Fig. 4, die Streuvorrichtung 16 selbst als Materialpuffer wirken, sodass insbesondere bei entsprechendem Befüllungsgrad der Streuvorrichtung 16 mit gemischten Ausgangsmaterialien dennoch eine kontinuierliche und ununterbrochene Bestreuung des Unterbandes 3 oder Transportmittels 8 ermöglicht ist. Alternativ können bei dieser Ausgestaltungsvariante natürlich auch mehrere ortsfest über dem Unterband 3 oder einem dem Unterband 3 vorgelagerten Transportmittel 8 eingesetzt werden. In diesem Fall können diese Streuvorrichtungen 16 zum Beispiel zumindest zeitweilig überlappend zum Bestreuen des Unterbandes 3 oder Transportmittels 8 mit gemischten Ausgangsmaterialien eingesetzt werden.

Wie in der Fig. 5 außerdem erkennbar ist, kann bei diesem Ausführungsbeispiel eine Steuerungsvorrichtung 38 auch mit einem Verstellantrieb für die Mischvorrichtungen 15 signalverbunden sein, und die Verstellung der Mischvorrichtungen 15 in die jeweiligen Positionen (39, 40 ,41) steuern.

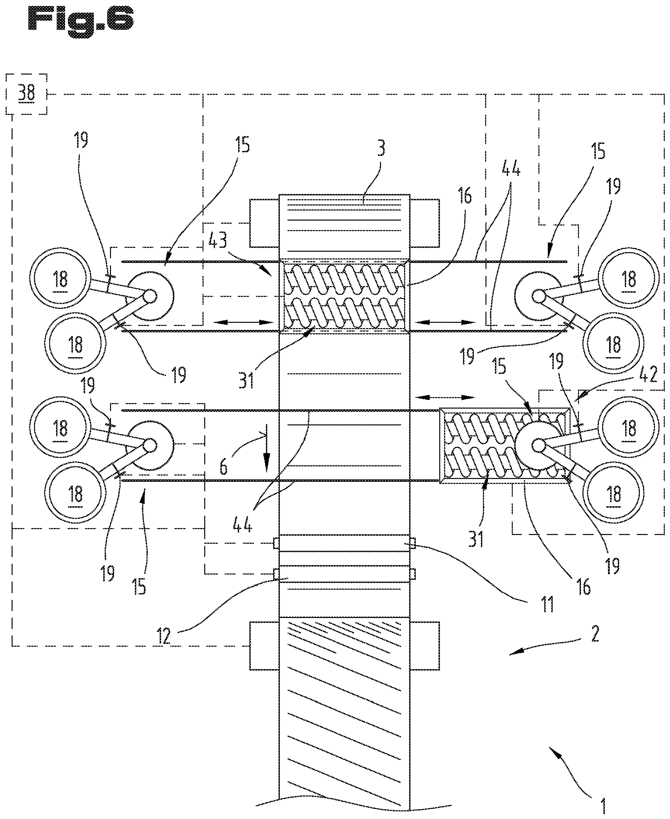

In der Fig. 6 ist eine weitere und gegebenenfalls für sich eigenständige Ausgestaltungsvariante einer Anlage 1 zur kontinuierlichen Herstellung von Kunststeinplatten dargestellt. In der Fig. 6 werden wiederum für gleiche Teile gleiche Bezugszeichen bzw. Bauteilbezeichnungen wie in den vorangegangenen Fig. 1-5 verwendet. Um unnötige Wiederholungen zu vermeiden, wird auf die detaillierte Beschreibung in den vorangegangenen Fig. 1-5 hingewiesen bzw. Bezug genommen.

Wie anhand der Fig. 6 veranschaulicht ist, kann bei einer Ausgestaltungsform der Anlage 1 zur kontinuierlichen Herstellung von Kunststeinplatten vorgesehen sein, dass wenigstens zwei verfahrbaren Streuvorrichtungen 16 angeordnet sind, welche verfahrbaren Streuvorrichtungen 16 zur Überführung von gemischten Ausgangsmaterialien aus einer Mischvorrichtung 15 in eine jeweilige Beladungsposition 42 verfahrbar sind, und welche verfahrbaren Streuvorrichtungen 16 zum Aufbringen der gemischten Ausgangsmaterialien in eine jeweilige Streuposition 43 oberhalb des Unterbandes 3 oder des dem Unterband 3 vorgelagerten Transportmittels 8 verfahrbar sind.

Eine Beladungsposition 42 kann im Prinzip zum Beispiel am Ende einer von einer Mischvorrichtung 15 wegführenden Transportstrecke für gemischte Ausgangsmaterialien sein. Vorzugsweise kann aber vorgesehen sein, dass die verfahrbaren Streuvorrichtungen 16 in eine jeweilige Beladungsposition 42 unterhalb einer Mischvorrichtung 15 verfahrbar angeordnet sind, wie dies anhand des Ausführungsbeispiels gemäß Fig. 6 dargestellt ist. In diesem Fall ist kein physisches Mittel 17, wie zum Beispiel bei dem in der Fig. 3 dargestellten Ausführungsbeispiel erforderlich, sondern ist das Mittel zum Transfer der gemischten Ausgangsmaterialien von einer Mischvorrichtung 15 in eine Streuvorrichtung 16 durch die Schwer- bzw. Erdanziehungskraft gebildet.

Die Streuvorrichtungen 16 können wie aus der Fig. 6 ersichtlich zum Beispiel horizontal und senkrecht zur Transportrichtung 6 auf Führungselementen44, beispielsweise Führungsschienen verfahrbar gelagert sein, und können beispielsweise motorisch, pneumatisch oder hydraulisch verfahrbar sein. Wie anhand Fig. 6 angedeutet ist, kann wiederum eine Steuerungsvorrichtung 38 vorgesehen sein, welche Steuerungsvorrichtung 38 zum Beladen der Streuvorrichtungen 16 mit gemischten Ausgangsmaterialien und zum Aufbringen der gemischten Ausgangsmaterialien auf das Unterband 3 oder auf das dem Unterband 3 vorgelagerte Transportmittel 8 zur zeitlichen versetzten Durchführung der Verfahrbewegungen der verfahrbaren Streuvorrichtungen 16 gemäß einer vierten Taktung ausgebildet ist. Die Steuerungsvorrichtung 38 kann zu diesem Zweck mit entsprechenden Aktuatoren und Sensoren für die Streuvorrichtungen 16 signaltechnisch verbunden sein.

Bei dem in der Fig. 6 dargestellten Ausführungsbeispiel sind jeder verfahrbaren Streuvorrichtung 16 jeweils zwei Mischvorrichtungen 15 zugeordnet, welche Mischvorrichtung 15 jeweils zu beiden Seiten des Unterbandes 3 oder vorgelagerten Transportmittels 8 angeordnet sind. Eine jeweilige Streuvorrichtung 16 kann bei diesem Ausführungsbeispiel zum Beladen mit gemischten Ausgangsmaterialien zwischen den beiden zugeordneten Mischvorrichtungen 15 hin und her wechseln. Es ist selbstverständlich, dass in Abhängigkeit von der Mischkapazität und insbesondere der erforderlichen Mischdauer bei einer alternativen Ausführungsform der Anlage 1 jeder Streuvorrichtung 16 grundsätzlich auch nur eine Mischvorrichtung 15 zugeordnet werden kann. Ganz grundsätzlich sind natürlich auch Anlagen 1 mit mehr als zwei verfahrbaren Streuvorrichtungen 16 und mehr als zwei ortsfesten Mischvorrichtungen 15 denkbar, wobei jeder Streuvorrichtung 16 zumindest eine Mischvorrichtung 15 zugeordnet sein muss.

Im Betrieb der Anlage 1 können sodann die gemischten Ausgangsmaterialien mittels den wenigstens zwei verfahrbaren Streuvorrichtungen 16 auf das Unterband 3 oder das dem Unterband 3 vorgelagerte Transportmittel 8 aufgebracht werden, wobei zum Überführen der gemischten Ausgangsmaterialien aus einer Mischvorrichtung 15 in eine jeweilige Streuvorrichtung 16 gemäß einer vierten Taktung die Streuvorrichtungen 16 zeitlich versetzt in eine jeweilige Beladungsposition 42 verfahren werden, und dass die Streuvorrichtungen 16 gemäß der vierten Taktung zum Aufbringen der gemischten Ausgangsmaterialien die Streuvorrichtungen 16 zeitlich versetzt in eine jeweilige Streuposition 43 oberhalb des Unterbandes 3 oder des dem Unterband 3 vorgelagerten Transportmittels 8 verfahren werden. Im Speziellen kann wie in Fig. 6 dargestellt vorgesehen sein, dass die wenigstens zwei verfahrbaren Streuvorrichtungen 16 zum Überführen der gemischten Ausgangsmaterialien aus einer Mischvorrichtung 15 in die Streuvorrichtungen 16 in eine jeweilige Beladungsposition 42 unterhalb einer Mischvorrichtung 15 verfahren werden, und anschließend eine Auslassöffnung 28, siehe Fig. 2a und 2b, der jeweiligen Mischvorrichtung 15 geöffnet wird.

Beim Einsatz von verfahrbaren Streuvorrichtungen 16 müssen natürlich mindestens zwei entsprechende Streuvorrichtungen 16 eingesetzt werden, um Materiallücken auf dem Unterband 3 zu verhindern. Da nicht gleichzeitig zwei verschiedene Streuvorrichtungen 16 denselben Platz über dem Unterband 3 oder dem vorgelagerten Transportmittel 8 einnehmen können, kann gemäß der vierten Taktung vorgesehen sein, dass zwei Streuvorrichtungen 16 zumindest zeitweise gleichzeitig eine Streuposition 43 über dem Unterband 3 oder dem vorgelagerten Transportmittel 8, siehe Fig. 1, einnehmen.

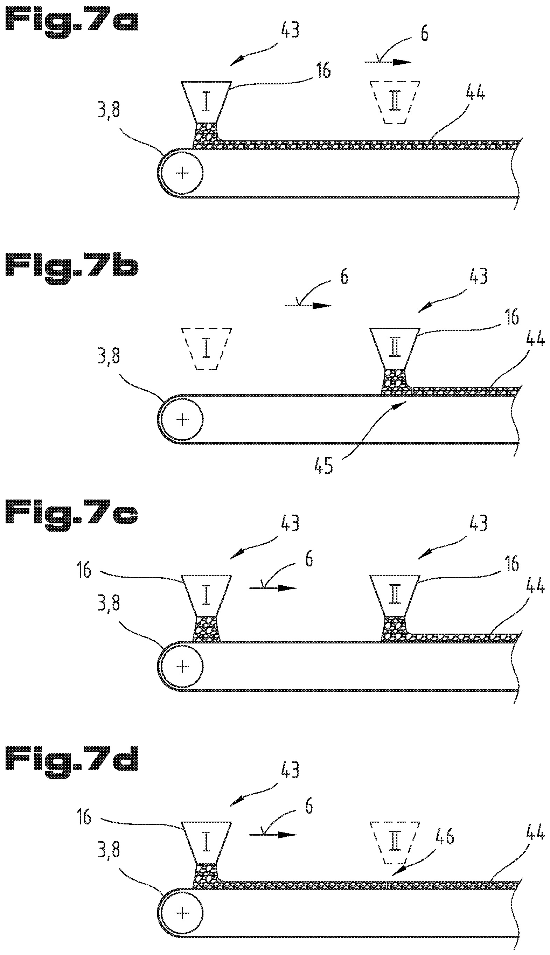

In den Fig 7a, 7b, 7c und 7d sind zur Veranschaulichung einer möglichen vierten Taktung bei einer Anlage mit zwei verfahrbaren Streuvorrichtungen 16 mehrere zeitlich versetzte Momentaufnahmen im Betrieb der Anlage schematisch und stark vereinfacht dargestellt. Bei den Darstellungen kennzeichnet eine mit durchgezogenen Linien dargestellte Streuvorrichtung 16 jeweils eine in Streuposition 43 befindliche und gerade auf das Unterband 3 oder das vorgelagerte Transportmittel 8 streuende Streuvorrichtung 16, während eine strichliert dargestellte Streuvorrichtung nicht in einer jeweiligen Streuposition über dem Unterband 3 oder dem vorgelagerten Transportmittel 8 befindlich ist, und zum Beispiel in eine Beladungsposition oder Halteposition verfahren wurde.

Fig. 7a zeigt eine mit I bezeichnete Streuvorrichtung 16, mittels welcher gerade gemischte Ausgangsmaterialien auf ein Unterband 3 oder auf ein einem Unterband 3 in Transportrichtung 6 vorgelagertes Transportmittel 8 aufgebracht werden. In der in Fig 7b dargestellten Momentaufnahme wurde das Bestreuen des Unterbandes 3 oder des vorgelagerten Transportmittels 8 mittels der mit I bezeichnete Streuvorrichtung 16 beendet, und wurde diese Streuvorrichtung 16 zum Beispiel in eine Beladungsposition verfahren. Es wurde gemäß der vierten Taktung in Fig. 7b eine weitere, mit II bezeichnete Streuvorrichtung 16 in eine Streuposition 43 oberhalb des Unterbandes 3 verfahren. Die Streuposition 43 der mit II bezeichneten Streuvorrichtung 16 kann wie aus Fig. 7b ersichtlich gegenüber der Streuposition 43 der mit I bezeichneten Streuvorrichtung 16 in Transportrichtung 6 versetzt sein. Wie ebenfalls aus Fig. 7b ersichtlich ist, kann ein Streu- bzw. Aufbringvorgang mittels der mit II bezeichneten Streuvorrichtung 16 zeitlich getaktet dann begonnen werden, wenn ein Schichtende 45 einer mittels der mit I bezeichneten Streuvorrichtung 16 auf das Unterband 3 oder das vorgelagerte Transportmittel 8 aufgebrachten und in Transportrichtung 6 geförderten Ausgangsmaterialienschicht 44, auf dem Unterband 3 oder dem Transportmittel 8 gerade die Streuposition 43 der mit II bezeichneten Streuvorrichtung 16 passiert.

In der Fig. 7c ist eine Momentaufnahme des Verfahrens dargestellt, bei welcher sich sowohl die mit I bezeichnete Streuvorrichtung 16 als auch die mit II bezeichnete Streuvorrichtung 16 in jeweils einer Streuposition 43 oberhalb des Unterbandes 3 oder des vorgelagerten Transportmittels 8 befinden. Bei der Momentaufnahme gemäß Fig. 7c wird gerade begonnen mittels der mit I bezeichneten Streuvorrichtung 16 gemischte Ausgangsmaterialien auf das Unterband 3 oder das vorgelagerte Transportmittel 8 aufzubringen, während mittels der mit II bezeichnete Streuvorrichtung 16 weiterhin gemischte Ausgangsmaterialien auf das Unterband 3 oder das vorgelagerte Transportmittel 8 aufgebracht werden. Wenn eine Schichtfront 46 der mittels der mit I bezeichneten Streuvorrichtung 16 aufgebrachten Ausgangsmaterialschicht auf dem Unterband 3 oder dem vorgelagerten Transportmittel 8 in Transportrichtung 6 die Streuposition 43 der mit II bezeichneten Streuvorrichtung 16 erreicht haben, kann das Aufbringen der gemischten Ausgangsmaterialien mittels der mit II bezeichneten Streuvorrichtung 16 beendet werden, und kann die mit II bezeichnete Streuvorrichtung 16 zum Beispiel in eine Beladungs- oder Halteposition verfahren werden, wie dies gemäß der Momentaufnahme in Fig. 7d dargestellt ist. Anschließend kann der Zyklus gemäß der zeitlichen Abfolge wie anhand der Momentaufnahmen in Fig. 7a, 7b, 7c und 7d dargestellt fortwährend wiederholt werden.

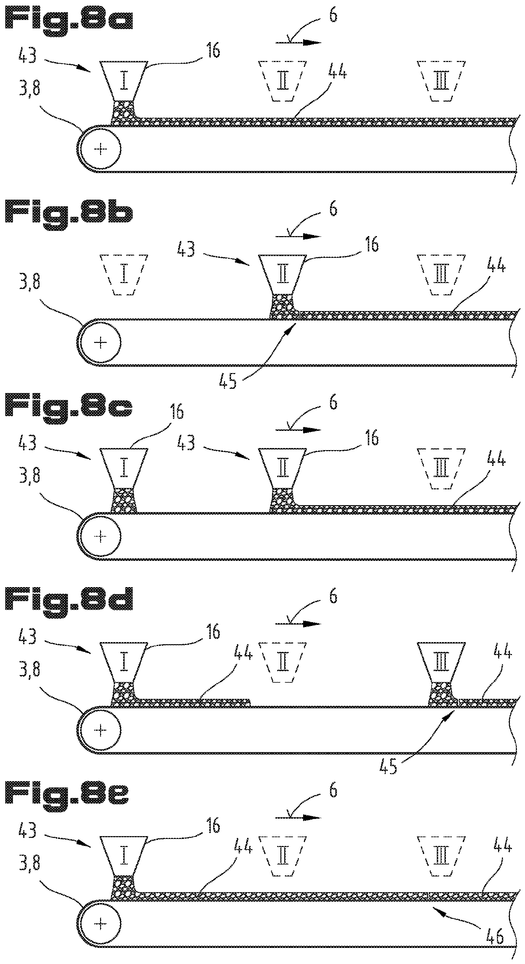

Wie bereits beschrieben, können zum Beispiel in Abhängigkeit von der Mischkapazität der jeweiligen Mischvorrichtungen und einer jeweils erforderlichen oder gewünschten Mischdauer einzelner Mischvorgänge auch mehr als zwei Mischvorrichtungen 15 und Streuvorrichtungen 16 eingesetzt werden. In den Fig. 8a, 8b, 8c, 8d und 8e ist ein weiteres Ausführungsbeispiel für einen möglichen Verfahrensablauf gemäß einer vierten Taktung, unter Verwendung von drei verfahrbaren Streuvorrichtungen 16 anhand jeweils dargestellter Momentaufnahmen im Betrieb der Anlage 1 veranschaulicht. Wie in Fig 7a, 7b, 7c und 7d kennzeichnet auch in den Fig. 8a, 8b, 8c, 8d und 8e eine mit durchgezogenen Linien dargestellte Streuvorrichtung 16 jeweils eine in Streuposition 43 befindliche und gerade gemischte Ausgangsmaterialien auf das Unterband 3 oder das vorgelagerte Transportmittel 8 aufbringende Streuvorrichtung 16, während eine strichliert dargestellte Streuvorrichtung nicht in einer jeweiligen Streuposition über dem Unterband 3 oder dem vorgelagerten Transportmittel 8 befindlich ist, und zum Beispiel in eine Beladungsposition oder Halteposition verfahren wurde.

Die Momentaufnahme gemäß Fig. 8a zeigt eine mit I bezeichnete Streuvorrichtung 16 oberhalb eines Unterbandes 3 oder vorgelagerten Transportmittels 8, welche Streuvorrichtung 16 gerade gemischte Ausgangsmaterialien auf das Unterband oder vorgelagerte Transportmittel aufbringt. In der zeitlich folgenden Momentaufnahme gemäß Fig. 8b wurde eine weitere, mit II bezeichnete Streuvorrichtung 16 in eine in Transportrichtung 6 versetzte Streuposition 43 verfahren, und bringt gerade diese mit II bezeichnete Streuvorrichtung 16 gemischte Ausgangsmaterialien auf das Unterband 3 oder das vorgelagerte Transportmittel 8 auf. Die Aufbringung kann wiederum gestartet werden, wenn ein Schichtende 46 der mittels der mit I bezeichneten Streuvorrichtung 16 auf das Unterband 3 oder Transportmittel 8 aufgebrechten Ausgangsmaterialschicht 44 auf dem Unterband 3 oder dem Transportmittel 8 die Streuposition der mit II bezeichneten Streuvorrichtung 16 passiert.

Die folgende Momentaufnahme gemäß Fig. 8c zeigt weiterhin die mit II bezeichnete Streuvorrichtung 16, welche noch immer gemischte Ausgangsmaterialien auf das Unterband 3 oder das vorgelagerte Transportmittel 8 aufbringt. Des Weiteren wurde gemäß diesem Ausführungsbeispiel auch die mit I bezeichnete Streuvorrichtung 16 wieder in Streuposition 43 verfahren, und werden auch mittels der mit I bezeichneten Streuvorrichtung 16 gemischte Ausgangsmaterialien aufgebracht. Dies zeitlich wiederum wie in der Ausführungsvariante gemäß Fig. 7c derart mit der mit II bezeichneten Streuvorrichtung 16, dass keine Materiallücken oder -überschüsse auf dem Unterband 3 oder Transportmittel 8 entstehen.

In der Fig. 8d ist eine folgende Momentaufnahme dargestellt, bei welcher die mit I bezeichnete Streuvorrichtung 16 weiterhin gemischte Ausgangsmaterialien auf das Unterband 3 oder das vorgelagerte Transportmittel 8 aufbringt. Die mit II bezeichnete Streuvorrichtung wurde vom Unterband 3 oder vom Transportmittel 8 wegverfahren. Eine weitere, mit III bezeichnete Streuvorrichtung 16 wurde in eine weitere bzw. dritte Streuposition 43 verfahren, und wurde gerade das Aufbringen von gemischten Ausgangsmaterialien mittels dieser Streuvorrichtung 16 gestartet. Das Aufbringen der gemischten Ausgangsmaterialien mittels der mit III bezeichneten Streuvorrichtung kann wie veranschaulicht zeitlich koordiniert dann gestartet werden, wenn ein Schichtende 45 der mittels der mit II bezeichneten Streuvorrichtung 16 aufgebrachten Ausgangsmaterialschicht 44 auf dem Unterband 3 oder dem Transportmittel 8 die Streuposition 43 der mit III bezeichneten Streuvorrichtung 16 passiert.

Wie schließlich anhand der Momentaufnahme gemäß Fig. 8e veranschaulicht ist, kann die mit III bezeichnete Streuvorrichtung 16 von deren Streuposition 43 wegverfahren werden, wenn eine Schichtfront 46 der mittels der mit I bezeichneten Streuvorrichtung 16 aufgebrachten Ausgangsmaterialschicht 44 auf dem Unterband 3 oder dem vorgelagerten Transportmittel 8 die Streuposition 43 der mit III bezeichneten Streuvorrichtung 16 erreicht hat. Die mit III bezeichnete Streuvorrichtung 16 füllt bei dem in den Fig. 8a-8e gezeigten Ausführungsbeispiel für eine mögliche Verfahrensführung die Materiallücke zwischen den von der mit II und der mit I bezeichneten Streuvorrichtungen 16.

Alternativ zu der in den Fig. 8a-8e dargestellten Verfahrenssequenz könnten selbstverständlich auch andere Ablaufsequenzen zum Verfahren von drei oder mehr Streuvorrichtungen 16 zur Anwendung kommen. Beispielsweise könnte vorgesehen sein, dass anstelle der in Fig. 8c dargestellten Momentaufnahme die mit III bezeichnete Vorrichtung folgend auf die mit II bezeichnete Streuvorrichtung 16 die gemischten Ausgangsmaterialien auf das Unterband 3 oder Transportmittel 8 aufbringt, und erst darauf folgend wieder mittels der mit I bezeichneten Streuvorrichtung 16.

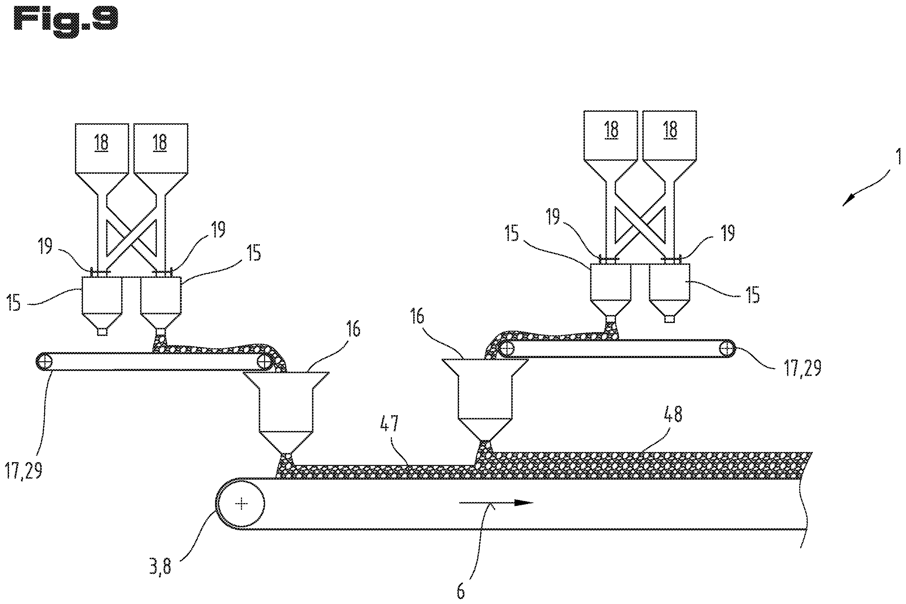

In der Fig. 9 ist schließlich eine weitere Ausführungsvariante des Verfahrens schematisch veranschaulicht. Wie aus der Fig. 9 ersichtlich kann vorgesehen sein, dass die gemischten Ausgangsmaterialien mittels wenigstens zwei Streuvorrichtungen 16 in wenigstens zwei übereinander angeordneten Ausgangsmaterialschichten 47, 48 auf das Unterband 3 oder auf das dem Unterband 3 vorgelagerte Transportmittel 8 aufgebracht werden. Dies unabhängig davon, ob ortsfest angeordnete oder verstell- bzw. verfahrbare Mischvorrichtungen 15 und Streuvorrichtungen 16 eingesetzt werden.

Bei dem dargestellten Ausführungsbeispiel sind sowohl ortsfest über dem Unterband 3 angeordnete Streuvorrichtungen 16, und insgesamt vier ortsfest angeordnete Mischvorrichtungen 15 gezeigt, wobei einer Streuvorrichtung 16 jeweils zwei Mischvorrichtungen 15 funktionstechnisch zugeordnet sind. Die Übergabe bzw. Überführung von gemischten Ausgangsmaterialien von einer jeweiligen Mischvorrichtung 15 in eine jeweilige Streuvorrichtung 16 wird bei dem in der Fig. 9 dargestellten Ausführungsbeispiel mit als Förderbänder 29 ausgebildeten physischen Mitteln 17 zum Transfer der gemischten Ausgangsmaterialien bewerkstelligt.

Wie in der Fig. 9 dargestellt, kann mittels der linkerhand dargestellten Streuvorrichtung 16 eine erste Ausgangsmaterialschicht 47 direkt auf dem Unterband 3 aufgebracht werden, und in Transportrichtung 6 folgend auf diese erste Ausgangsmaterialschicht 47 eine zweite Ausgangsmaterialschicht 48 mittels der in Fig. 9 rechterhand dargestellten Streuvorrichtung 16 eine zweite Ausgangsmaterialschicht 48 auf die erste Ausgangsmaterialschicht 47 aufgebracht werden. Eine derartige Verfahrensführung bzw. Anlage 1 ermöglicht vor allem höhere Bandlaufgeschwindigkeit des Unterbandes 3 und Oberbandes einer Doppelbandpresse, und damit auch höhere Produktionsraten für Kunststeinplatten. Die Mischvorgänge in den Mischvorrichtungen 15 respektive die Überführungsvorgänge von gemischten Ausgangsmaterialien in die Streuvorrichtungen 16 werden natürlich auch im Falle einer Verfahrensführung durch Aufbringen mehrerer Ausgangsmaterialschichten 47, 48 jeweils gemäß einer ersten respektive zweiten Taktung durchgeführt.

Selbstverständlich ist eine derartige Verfahrensführung auch mittels verstellbare Mischvorrichtungen 15 oder verfahrbare Streuvorrichtungen 16 möglich. Außerdem ist natürlich auch ein Aufbringen von mehr als zwei Ausgangsmaterialschichten 47, 48 grundsätzlich möglich.

Unabhängig hiervon wird oder werden eine Ausgangsmaterialschicht 44 oder Ausgangsmaterialschichten 47, 48 auf dem Unterband 3 in Transportrichtung 6, gegebenenfalls nach einer Vorverdichtung mit Vorverdichtungswalzen 11 und/oder -walzenpaaren 12 zwischen Unterband 3 und Oberband 4 der Doppelbandpresse 2 gefördert, wie dies am besten anhand der Fig. 1 ersichtlich ist. Die Ausgangsmaterialschichten 44, 47, 48 können in der Doppelbandpresse 2 zum Beispiel mittels Pressbacken oder Pressteppiche 49 wie etwa Stangenpressteppiche zur endgültigen, jeweils gewünschten End-Dicke bzw. Dichte der Kunststeinplatten verdichtet werden. Wie bereits beschrieben kann eine Vorverdichtung der gemischten Ausgangsmaterialien vor dem Eintritt zwischen Unterband 3 und Oberband 4 allerdings schon sehr hoch sein, sodass zwischen Unterband 3 und Oberband 4 der Doppelbandpresse 2 nur mehr eine geringe, oder sogar zumindest fast keine Schichtdickenreduktion bzw. Verdichtung erfolgen kann. Das organische Bindemittel kann in der Doppelbandpresse 2 durch Erhitzen der gemischten Ausgangsmaterialien, zum Beispiel mittels der in Fig 1 dargestellten Heizmittel 9 ausgehärtet werden. Abschließend kann gegebenenfalls nach Durchlaufen einer Abkühlzone 22 ein resultierender Kunststein-Materialstrang 24 je nach gewünschten Dimensionen mittels einer Schneidvorrichtung 23 zu den Kunststeinplatten vereinzelt werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Anlage | 31 | Vergleichmäßigungs-Vorrichtung |
| 2 | Doppelbandpresse | 32 | Walze |
| 3 | Unterband | 33 | Stellklappe |
| 4 | Oberband | 34 | Schließstellung |
| 5 | Materialaufbringungsbereich | 35 | Austragsseite |
| 6 | Transportrichtung | 36 | Stellklappe |
| 7 | Bearbeitungsbereich | 37 | Seitenbegrenzung |
| 8 | Transportmittel | 38 | Steuerungsvorrichtung |
| 9 | Heizmittel | 39 | Befüllposition |
| 10 | Eintrittsstelle | 40 | Mischposition |
| 11 | Vorverdichtungswalze | 41 | Überführungsposition |
| 12 | Vorverdichtungswalzenpaar | 42 | Beladungsposition |
| 13 | Verdichtungswalze | 43 | Streuposition |
| 14 | Gegendruckwalze | 44 | Ausgangsmaterialienschicht |
| 15 | Mischvorrichtung | 45 | Schichtende |
| 16 | Streuvorrichtung | 46 | Schichtfront |
| 17 | Mittel | 47 | Ausgangsmaterialienschicht |
| 18 | Vorratsbehältnis | 48 | Ausgangsmaterialienschicht |
| 19 | Dosiervorrichtung | 49 | Pressteppich |
| 20 | Pflug | | |
| 21 | Rakel | | |
| 22 | Abkühlzone | | |
| 23 | Schneidvorrichtung | | |
| 24 | Materialstrang | | |
| 25 | Umschaltklappe | | |
| 26 | Gehäuse | | |
| 27 | Einlassöffnung | | |
| 28 | Auslassöffnung | | |
| 29 | Förderband | | |
| 30 | Materialrutsche | | |

## Patentansprüche

1. Verfahren zur kontinuierlichen Herstellung von Kunststeinplatten, umfassend die Schritte
- Bereitstellen von Ausgangsmaterialien umfassend zumindest einen mineralischen Füllstoff und zumindest ein organisches Bindemittel,
- Mischen der Ausgangsmaterialien,
- Aufbringen der gemischten Ausgangsmaterialien auf ein kontinuierlich bewegtes Unterband (3) einer Doppelbandpresse (2) oder ein dem Unterband (3) vorgelagertes, kontinuierlich bewegtes Transportmittel (8),
- kontinuierliches Verpressen der gemischten Ausgangsmaterialien zur einem verpressten Materialstrang (24),
- Härten des organischen Bindemittels,
- Vereinzeln des Materialstranges (24) zu Kunststeinplatten,
**dadurch gekennzeichnet, dass**
das Mischen der Ausgangsmaterialien mittels mindestens zwei separaten Mischvorrichtungen (15) zeitlich versetzt gemäß einer ersten Taktung im Batch-Mischbetrieb durchgeführt wird, wobei den mindestens zwei Mischvorrichtungen (15) vor Beginn eines jeweiligen Batch-Mischvorgangs eine definierte Menge der Ausgangsmaterialien zugeführt wird,
und dass die gemischten Ausgangsmaterialien aus den mindestens zwei Mischvorrichtungen (15) zeitlich versetzt gemäß einer zweiten Taktung in eine oder mehrere Streuvorrichtung(en) (16) überführt werden, und die gemischten Ausgangsmaterialien mittels der oder den Streuvorrichtung(en) (16) kontinuierlich und ununterbrochen auf das Unterband (3) oder das dem Unterband (3) vorgelagerte Transportmittel (8) aufgebracht werden.

2. Verfahren nach Anspruch 1, **dadurch gekennzeichnet, dass** die Mischvorrichtungen (15) über eine Einlassöffnung (27) mit den Ausgangsmaterialien beschickt werden, und die gemischten Ausgangsmaterialien aus den Mischvorrichtungen (15) über eine Auslassöffnung (28) geleert werden, wobei für das jeweilige Mischen die Einlassöffnung (27) und die Auslassöffnung (28) geschlossen werden, sodass das Mischen jeweils in einem geschlossenen Gehäuse (26) der Mischvorrichtungen (15) durchgeführt wird.

3. Verfahren nach Anspruch 1 oder 2, **dadurch gekennzeichnet, dass** die gemischten Ausgangsmaterialien aus mindestens zwei ortsfest angeordneten Mischvorrichtungen (15) wenigstens einer ortsfest oberhalb des Unterbands (3) oder ortsfest oberhalb des dem Unterband (3) vorgelagerten Transportmittels (8) angeordneten Streuvorrichtung (16) über zumindest ein physisches Mittel (17) zum Transfer von gemischten Ausgangsmaterialien, insbesondere ein Förderband (29), eine Materialrutsche (30) oder einen -schlauch zugeführt werden.

4. Verfahren nach Anspruch 1 oder 2, **dadurch gekennzeichnet, dass** die Ausgangsmaterialien mittels mindestens zwei verstellbaren Mischvorrichtungen (15) gemischt werden, wobei eine jeweilige verstellbare Mischvorrichtung (15) zum Überführen der gemischten Ausgangsmaterialien in wenigstens eine ortsfest oberhalb des Unterbandes (3) oder oberhalb des dem Unterband (3) vorgelagerten Transportmittels (8) angeordnete Streuvorrichtung (16), jeweils in eine Überführungsposition (41) oberhalb der wenigstens einen Streuvorrichtung (16) verstellt wird.

5. Verfahren nach Anspruch 1 oder 2, **dadurch gekennzeichnet, dass** die gemischten Ausgangsmaterialien mittels wenigstens zwei verfahrbaren Streuvorrichtungen (16) auf das Unterband (3) oder das dem Unterband (3) vorgelagerte Transportmittel (8) aufgebracht werden, wobei gemäß einer vierten Taktung zum Überführen der gemischten Ausgangsmaterialien aus einer Mischvorrichtung (15) in eine jeweilige Streuvorrichtung (16) die Streuvorrichtungen (16) zeitlich versetzt in eine jeweilige Beladungsposition (42) verfahren werden, und gemäß der vierten Taktung die Streuvorrichtungen (16) zum Aufbringen der gemischten Ausgangsmaterialien die Streuvorrichtungen (16) zeitlich versetzt in eine jeweilige Streuposition (43) oberhalb des Unterbandes (3) oder des dem Unterband (3) vorgelagerten Transportmittels (8) verfahren werden.

6. Verfahren nach Anspruch 5, **dadurch gekennzeichnet, dass** die wenigstens zwei verfahrbaren Streuvorrichtungen (16) zum Überführen der gemischten Ausgangsmaterialien aus einer Mischvorrichtung (15) in die Streuvorrichtungen (16) in eine jeweilige Beladungsposition (42) unterhalb einer Mischvorrichtung (15) verfahren werden, und anschließend eine Auslassöffnung der jeweiligen Mischvorrichtung (15) geöffnet wird.

7. Verfahren nach einem der vorhergehenden Ansprüchen, **dadurch gekennzeichnet, dass** die gemischten Ausgangsmaterialien mittels einer in der oder den Streuvorrichtung(en) (16) angeordneten Vergleichmäßigungs-Vorrichtung (31) gleichmäßig und homogen verteilt werden, und auf das Unterband (3) oder das dem Unterband (3) vorgelagerte Transportmittel (8) aufgebracht werden.

8. Verfahren nach einem der vorhergehenden Ansprüche, **dadurch gekennzeichnet, dass** die auf das Unterband (3) aufgebrachten Ausgangsmaterialien vor dem Eintritt zwischen Oberband (4) und Unterband (3) der Doppelbandpresse (2) mittels einer oder mehrerer Vorverdichtungswalze(n) (11) oder Vorverdichtungswalzenpaar(e) (12) verdichtet werden.

9. Anlage (1) zur kontinuierlichen Herstellung von Kunststeinplatten, umfassend
- ein oder mehrere Vorratsbehältnis(se) (18) zur Beinhaltung von Ausgangsmaterialien,
- und eine Doppelbandpresse (2) mit einem Unterband (3) und einem Oberband (4), sowie zumindest einem Heizmittel (5) zum Erhitzen von zwischen dem Unterband (3) und dem Oberband (4) geförderten Materialien,
wobei zum Mischen der Ausgangsmaterialien mindestens zwei separat angeordnete Mischvorrichtungen (15) angeordnet sind,
und wobei eine oder mehrere zur kontinuierlichen Beschickung des Unterbandes (3) oder eines dem Unterband (3) vorgelagerten Transportmittels (8) mit gemischten Ausgangsmaterialien ausgebildete Streuvorrichtung(en) (16) angeordnet ist oder sind,
wobei wenigstens ein Mittel (17) zum Transfer von gemischten Ausgangsmaterialien aus den mindestens zwei Mischvorrichtungen (15) in die Streuvorrichtung(en) (16) vorgesehen ist.
wobei
eine Steuerungsvorrichtung (38) vorgesehen ist, **dadurch gekennzeichnet, dass** die Mischvorrichtungen für Batch-Mischbetrieb ausgestaltete Mischvorrichtungen (5,6) sind, und dass die Steuerungsvorrichtung (38) zur zeitlichen versetzten Durchführung von Mischvorgängen in den Mischvorrichtungen (15) gemäß einer ersten Taktung, sowie zur zeitlichen versetzten Durchführung von Überführungsvorgängen der gemischten Ausgangsmaterialien von den Mischvorrichtungen (15) in die Streuvorrichtung(en) (16) gemäß einer zweiten Taktung ausgebildet ist.

10. Anlage nach Anspruch 9, **dadurch gekennzeichnet, dass** mindestens zwei ortsfest angeordnete Mischvorrichtungen (15) sowie wenigstens eine ortsfest oberhalb des Unterbands (3) oder ortsfest oberhalb des dem Unterband (3) vorgelagerten Transportmittels (8) angeordnete Streuvorrichtung (16) vorgesehen sind, und dass zur Überführung von gemischten Ausgangsmaterialien von den Mischvorrichtungen (15) in die wenigstens eine ortsfest angeordnete Streuvorrichtung (16) zumindest ein physisches Mittel (17) zum Transfer von gemischten Ausgangsmaterialien, insbesondere ein Förderband (29), eine Materialrutsche (30) oder -schlauch, angeordnet ist.

11. Anlage nach Anspruch 9 , **dadurch gekennzeichnet, dass** mindestens zwei verstellbare Mischvorrichtungen (15) und wenigstens eine ortsfest oberhalb des Unterbandes (3) oder oberhalb des dem Unterband (3) vorgelagerten Transportmittels (8) angeordnete Streuvorrichtung (16) vorgesehen sind, wobei eine jeweilige Mischvorrichtung (15) in eine Auslassposition oberhalb der wenigstens einen Streuvorrichtung (16) verstellbar angeordnet ist.

12. Anlage nach Anspruch 9 , **dadurch gekennzeichnet, dass** wenigstens zwei verfahrbaren Streuvorrichtungen (16) angeordnet sind, welche verfahrbaren Streuvorrichtungen (16) zur Überführung von gemischten Ausgangsmaterialien aus einer jeweiligen Mischvorrichtung (15) in eine jeweilige Beladungsposition (42) verfahrbar sind, und welche verfahrbaren Streuvorrichtungen (16) zum Aufbringen der gemischten Ausgangsmaterialien in eine jeweilige Streuposition (43) oberhalb des Unterbandes (3) oder des dem Unterband (3) vorgelagerten Transportmittels (8) verfahrbar sind.

13. Anlage nach Anspruch 12, **dadurch gekennzeichnet, dass** die verfahrbaren Streuvorrichtungen (16) in eine jeweilige Beladungsposition (42) unterhalb einer Mischvorrichtung (15) verfahrbar angeordnet sind.

14. Anlage nach Anspruch 12 oder 13, **dadurch gekennzeichnet, dass** eine Steuerungsvorrichtung (38) vorgesehen ist, welche Steuerungsvorrichtung (38) zum Beladen der Streuvorrichtungen (16) mit gemischten Ausgangsmaterialien und zum Aufbringen der gemischten Ausgangsmaterialien auf das Unterband (3) oder auf das dem Unterband (3) vorgelagerten Transportmittel (8) zur zeitlichen versetzten Durchführung der Verfahrbewegungen der verfahrbaren Streuvorrichtungen (16) gemäß einer vierten Taktung ausgebildet ist.

15. Anlage nach einem der Ansprüche 9 bis 14, **dadurch gekennzeichnet, dass** in einer Transportrichtung (6) für die Ausgangsmaterialien an dem Unterband (3) vor einer Eintrittstelle (10) zwischen Oberband (4) und Unterband (3) der Doppelbandpresse (2) eine oder mehrere Vorverdichtungswalze(n) (11) oder Vorverdichtungswalzenpaar(e) (12) angeordnet ist oder sind.

## Claims

1. A method for the continuous production of engineered stone slabs, comprising the steps
- provisioning raw materials comprising at least one mineral filler and at least one organic binder,
- mixing the raw materials,
- applying the mixed raw materials to a continuously moving lower belt (3) of a dual-belt press (2), or a continuously moving conveying means (8) mounted upstream of the lower belt (3),
- continuously pressing the mixed raw materials to form a pressed material strand (24),
- curing the organic binder,
- separating the material strand (24) to form individual engineered stone slabs,
**characterized in that**
the mixing of the raw materials is carried out in accordance with a first timing at staggered times in a batch mixing operation by means of at least two separate mixing devices (15), wherein the at least two mixing devices (15) are supplied with a defined quantity of the raw materials before a respective batch mixing operation begins,
and that the mixed raw materials are transferred, in accordance with a second timing and at staggered times, from the at least two mixing devices (15) into one, or multiple, spreading device(s) (16), and the mixed raw materials are applied continuously and without interruption to the lower belt (3), or the conveying means (8) mounted upstream of the lower belt (3), by means of the spreading device(s) (16).

2. The method according to claim 1, **characterized in that** the mixing devices (15) are fed with the raw materials via an inlet opening (27), and the mixed raw materials are emptied from the mixing devices (15) via an outlet opening (28), wherein the inlet opening (27) and the outlet opening (28) are closed for the respective mixing operation, so that the mixing operation is respectively carried out in a closed casing (26) of the mixing devices (15).

3. The method according to claim 1 or 2, **characterized in that** the mixed raw materials are supplied from at least two mixing devices (15) arranged in a fixed-installation manner, to at least one spreading device (16) arranged in a fixed-installation manner above the lower belt (3), or arranged in a fixed-installation manner above the conveying means (8) mounted upstream of the lower belt (3), via at least one physical means (17) for transferring mixed raw materials, in particular a conveyor belt (29), a material chute (30) or a material hose.

4. The method according to claim 1 or 2, **characterized in that** the raw materials are mixed by means of at least two movable mixing devices (15), wherein a respective movable mixing device (15) is moved respectively to a transfer position (41) above at least one spreading device (16) arranged in a fixed-installation manner above the lower belt (3), or above the conveying means (8) mounted upstream of the lower belt (3), to transfer the mixed raw materials into the at least one spreading device (16).

5. The method according to claim 1 or 2, **characterized in that** the mixed raw materials are applied to the lower belt (3), or the conveying means (8) mounted upstream of the lower belt (3), by means of at least two movable spreading devices (16), wherein the spreading devices (16) are moved, in accordance with a fourth timing and at staggered times, to a respective loading position (42) to transfer the mixed raw materials from a mixing device (15) into a respective spreading device (16), and the spreading devices (16) are moved, in accordance with the fourth timing and at staggered times, to a respective spreading position (43) above the lower belt (3), or the conveying means (8) mounted upstream of the lower belt (3), to apply the mixed raw materials.

6. The method according to claim 5, **characterized in that** the at least two movable spreading devices (16) are moved to a respective loading position (42) below a mixing device (15), and an outlet opening of the respective mixing device (15) is subsequently opened, to transfer the mixed raw materials from a mixing device (15) into the spreading devices (16).

7. The method according to one of the preceding claims, **characterized in that** the mixed raw materials are spread out evenly and homogeneously by means of a homogenization device (31) arranged in the spreading device(s) (16), and are applied to the lower belt (3), or the conveying means (8) mounted upstream of the lower belt (3).

8. The method according to one of the preceding claims, **characterized in that** the raw materials applied to the lower belt (3) before the entry between upper belt (4) and lower belt (3) of the dual-belt press (2) are compacted by means of one, or multiple, precompaction roll(s) (11), or pair(s) of precompaction rolls (12).

9. A plant (1) for the continuous production of engineered stone slabs, comprising
- one, or multiple, supply container(s) (18) for containing raw materials,
- and a dual-belt press (2) having a lower belt (3) and an upper belt (4), as well as at least one heating means (5) for heating materials conveyed between the lower belt (3) and the upper belt (4),
wherein at least two separately arranged mixing devices (15) are arranged to mix the raw materials,
and wherein one, or multiple, spreading device(s) (16) is, or are, arranged, which is, or are, configured for continuous feeding of the lower belt (3), or of a conveying means (8) mounted upstream of the lower belt (3), with mixed raw materials,
wherein at least one means (17) for transferring mixed raw materials from the at least two mixing devices (15) into the spreading device(s) (16) is provided,
wherein
a control device (38) is provided, **characterized in that** the mixing devices are mixing devices (5, 6) configured for batch mixing operations, and that the control device (38) is configured for carrying out, in accordance with a first timing and at staggered times, mixing operations in the mixing devices (15), as well as for carrying out, in accordance with a second timing and at staggered times, transfer operations of the mixed raw materials from the mixing devices (15) into the spreading device(s) (16).

10. The plant according to claim 9, **characterized in that** at least two mixing devices (15) arranged in a fixed-installation manner, as well as at least one spreading device (16) arranged in a fixed-installation manner above the lower belt (3), or arranged in a fixed-installation manner above the conveying means (8) mounted upstream of the lower belt (3), are provided, and that at least one physical means (17) for transferring mixed raw materials, in particular a conveyor belt (29), a material chute (30) or material hose, is arranged to transfer mixed raw materials from the mixing devices (15) into the at least one spreading device (16) arranged in a fixed-installation manner.

11. The plant according to claim 9, **characterized in that** at least two movable mixing devices (15) and at least one spreading device (16) arranged in a fixed-installation manner above the lower belt (3), or above the conveying means (8) mounted upstream of the lower belt (3), are provided, wherein a respective mixing device (15) is arranged so as to be movable to an outlet position above the at least one spreading device (16).

12. The pant according to claim 9, **characterized in that** at least two movable spreading devices (16) are arranged, which movable spreading devices (16) are movable from a respective mixing device (15) to a respective loading position (42) to transfer mixed raw materials, and which movable spreading devices (16) are movable to a respective spreading position (43) above the lower belt (3), or the conveying means (8) mounted upstream of the lower belt (3), to apply the mixed raw materials.

13. The plant according to claim 12, **characterized in that** the movable spreading devices (16) are arranged so as to be movable to a respective loading position (42) below a mixing device (15).

14. The plant according to claim 12 or 13, **characterized in that** a control device (38) is provided, which control device (38) is configured for carrying out, in accordance with a fourth timing and at staggered times, the movements of the movable spreading devices (16) to load the spreading devices (16) with mixed raw materials and to apply the mixed raw materials to the lower belt (3), or to the conveying means (8) mounted upstream of the lower belt (3).

15. The plant according to one of claims 9 to 14, **characterized in that**, in a transport direction (6) for the raw materials at the lower belt (3) before an entry point (10) between upper belt (4) and lower belt (3) of the dual-belt press (2), one, or multiple, precompaction roll(s) (11), or pair(s) of precompaction rolls (12), is, or are, arranged.

## Revendications

1. Procédé de fabrication en continu de panneaux en pierre artificielle, comprenant les étapes suivantes
- mise à disposition de matériaux de départ comprenant au moins une charge minérale et au moins un liant organique,
- mélange des matériaux de départ,
- application des matériaux de départ sur une bande inférieure (3) en déplacement continu d'une presse à double bande (2) ou un moyen de transport (8), disposé en amont de la bande inférieure (3) et se déplaçant de manière continue,
- pressage continu des matériaux de départ afin d'obtenir une bande de matériau (24)
- durcissement du liant organique,
- sectionnement de la bande de matériau (24) en panneaux de pierre artificielle,
**caractérisé en ce que**
le mélange des matériaux de départ est effectué de manière décalée dans le temps au moyen d'au moins deux dispositifs de mélange (15) séparés, selon une première cadence de mélange par lots,
dans lequel, dans les au moins deux dispositifs de mélange (15), au début d'un processus de mélange par lots, une quantité définie de matériaux de départ est introduite,
et **en ce que** les matériaux de départ mélangés sont transférés à partir des au moins deux dispositifs de mélange (15) de manière décalée dans le temps selon une deuxième cadence, vers un ou plusieurs dispositifs de dispersion (16) et les matériaux de départ mélangés sont appliqués de manière continue et ininterrompue sur la bande inférieure (3) ou le moyen de transport (8) disposé en amont de la bande inférieure (3), au moyen du ou des dispositifs de dispersion (16).

2. Procédé selon la revendication 1, **caractérisé en ce que** les dispositifs de mélange (15) sont alimentés par l'intermédiaire d'une ouverture d'entrée (27) avec les matériaux de départ et les matériaux de départ mélangés sont évacués des dispositifs de mélange (15) par l'intermédiaire d'une ouverture de sortie (28), dans lequel, pour le mélange respectif, l'ouverture d'entrée (27) et l'ouverture de sortie (28) sont fermées, de sorte que le mélange est effectué respectivement dans un boîtier fermé (26) des dispositifs de mélange (15).

3. Procédé selon la revendication 1 ou 2, **caractérisé en ce que** les matériaux de départ mélangés provenant d'au moins deux dispositifs de mélange (15) disposés de manière fixe, sont introduits dans au moins un dispositif de dispersion (16) disposé de manière fixe au-dessus de la bande inférieure (3) ou de manière fixe au-dessus du moyen de transport (8) disposé en amont de la bande inférieure (3), par l'intermédiaire d'au moins un moyen physique (17) pour le transfert des matériaux de départ mélangés, plus particulièrement un convoyeur à bande (29), une goulotte (30) ou un tuyau.

4. Procédé selon la revendication 1 ou 2, **caractérisé en ce que** les matériaux de départ sont mélangés au moyen d'au moins deux dispositifs de mélange (15) réglables, dans lequel un dispositif de mélange (15) réglable correspondant est déplacé, pour le transfert des matériaux de départ mélangés vers au moins un dispositif de dispersion (16) disposé de manière fixe au-dessus de la bande inférieure (3) ou de manière fixe au-dessus du moyen de transport (8), respectivement dans une position de transfert (41) au-dessus de l'au moins un dispositif de dispersion (16).

5. Procédé selon la revendication 1 ou 2, **caractérisé en ce que** les matériaux de départ mélangés sont appliqués, au moyen d'au moins deux dispositifs de dispersion mobiles (16), sur la bande inférieure (3) ou sur le moyen de transport (8) disposé en amont de la bande inférieure (3), dans lequel, selon une quatrième cadence pour le transfert des matériaux de départ mélangés d'un dispositif de mélange (15) vers un dispositif de dispersion (16) correspondant, le dispositif de dispersion (16) est déplacé de manière décalée dans le temps vers une position de chargement (42) correspondante et, selon la quatrième cadence, les dispositifs de dispersion (16) sont déplacés, pour l'application des matériaux de départ mélangés, les dispositifs de dispersion (16), de manière décalée dans le temps vers une position de dispersion (43) correspondante au-dessus de la bande inférieure (3) ou du moyen de transport (8) disposé en amont de la bande inférieure (3).

6. Procédé selon la revendication 5, **caractérisé en ce que** les au moins deux dispositifs de dispersion mobiles (16) sont déplacés, pour le transfert des matériaux de départ mélangés d'un dispositif de mélange (15) vers le dispositif de dispersion (16), vers une position de chargement (42) correspondante en dessous d'un dispositif de mélange (15) puis une ouverture de sortie du dispositif de mélange (15) correspondant est ouverte.

7. Procédé selon l'une des revendications précédentes, **caractérisé en ce que** les matériaux de départ mélangés sont réparties de manière uniforme et homogène au moyen d'un dispositif d'uniformisation (31) disposé dans le ou les dispositifs de dispersion (16) et sont appliqués sur la bande inférieure (3) ou le moyen de transport (8) disposé en amont de la bande inférieure (3).

8. Procédé selon l'une des revendications précédentes, **caractérisé en ce que** les matériaux de départ appliqués sur la bande inférieure (3) sont compactés, avant l'entrée entre la bande supérieure (4) et la bande inférieure (3) la presse à double bande (2), au moyen d'un ou plusieurs rouleaux de pré-compactage (11) ou paires de rouleaux de pré-compactage (12).

9. Installation (1) pour la fabrication en continu de panneaux en pierre artificielle, comprenant
- un ou plusieurs réservoirs (18) contenant des matériaux de départ,
- et une presse à double bande (2) avec une bande inférieure (3) et une bande supérieure (4), ainsi qu'au moins un moyen de chauffage (5) pour le chauffage des matériaux convoyés entre la bande inférieure (3) et la bande supérieure (4),
dans lequel, pour le mélange des matériaux de départ, sont prévus au moins deux dispositifs de mélange (15) séparés,
et dans lequel un ou plusieurs dispositifs de dispersion (16) sont prévus pour l'alimentation en continu de la bande inférieure (3) ou d'un moyen de transport (8) disposé en amont de la bande inférieure (3) en matériaux de départ,
dans lequel au moins un moyen (17) est prévu pour le transfert des matériaux de départ mélangés des au moins deux dispositifs de mélange (15) vers le ou les dispositifs de dispersion (16),
dans lequel un dispositif de commande (38) est prévu, **caractérisé en ce que** les dispositifs de mélange sont des dispositifs de mélange (5, 6) conçus pour un mélange par lots, et **en ce que** le dispositif de commande (38) est conçu pour la réalisation, de manière décalée dans le temps, de processus de mélange dans les dispositifs de mélange (15) selon une première cadence, ainsi que pour la réalisation, de manière décalée dans le temps, d'un processus de transfert des matériaux de départ mélangés des dispositifs de mélange (15) vers le ou les dispositifs de dispersion (16) selon une deuxième cadence.

10. Installation selon la revendication 9, **caractérisée en ce qu'**au moins deux dispositifs de mélange (15) fixes ainsi qu'au moins un dispositif de dispersion (16) disposé de manière fixe au-dessus de la bande inférieure (3) ou disposé de manière fixe au-dessus d'un moyen de transport (8) disposé en amont de la bande inférieure (3), sont prévus, et **en ce que**, pour le transfert des matériaux de départ mélangés des dispositifs de mélange (15) vers l'au moins un dispositif de dispersion (16) disposé de manière fixe, au moins un moyen physique (17) est prévu pour le transfert des matériaux de départ mélangés, plus particulièrement un convoyeur à bande (29), une goulotte (30) ou un tuyau.

11. Installation selon la revendication 9, **caractérisée en ce qu'**au moins deux dispositifs de mélange (15) mobiles et au moins un dispositif de dispersion (16) disposé de manière fixe au-dessus de la bande inférieure (3) ou disposé de manière fixe au-dessus d'un moyen de transport (8) disposé en amont de la bande inférieure (3), sont prévus, dans lequel un dispositif de mélange (15) correspondant est disposé de manière mobile dans une position de sortie au-dessus de l'au moins un dispositif de dispersion (16).

12. Installation selon la revendication 9, **caractérisée en ce que** deux dispositifs de dispersion mobiles (16) sont prévus, ces dispositifs de dispersion mobiles (16) pouvant être déplacés pour le transfert des matériaux de départ mélangés d'un dispositif de mélange (15) correspondant vers une position de chargement (42) correspondante et ces dispositifs de dispersion mobiles (16) pouvant être déplacés pour l'application des matériaux de départ mélangés vers une position de dispersion (43) correspondante au-dessus de la bande inférieure (3) ou du moyen de transport (8) disposé en amont de la bande inférieure (3).

13. Installation selon la revendication 12, **caractérisée en ce que** les dispositifs de dispersion mobiles (16) sont disposés de façon mobile vers une position de chargement (42) correspondante en dessous d'un dispositif de mélange (15).

14. Installation selon la revendication 12 ou 13, **caractérisée en ce qu'**un dispositif de commande (38) est prévu, ce dispositif de commande (38) étant conçu pour le chargement des dispositifs de dispersion (16) avec des matériaux de départ mélangés et pour l'application des matériaux de départ mélangés sur la bande inférieure (3) sur le moyen de transport (8) disposé en amont de la bande inférieure (3), pour la réalisation, de manière décalée dans le temps, des déplacements des dispositifs de dispersion mobiles (16) selon une quatrième cadence.

15. Installation selon l'une des revendications 9 à 14, **caractérisée en ce que**, dans une direction de transport (6) pour les matériaux de départ, sur la bande inférieure (3), avant un point d'entrée (10) entre la bande supérieure (4) et la bande inférieure (3) de la presse à double bande (2), sont prévus un ou plusieurs rouleaux de pré-compactage (11) ou paires de rouleaux de pré-compactage (12).
